# EUROPÄISCHE PATENTSCHRIFT

(11) **EP 4 334 012 B1**
(45) Veröffentlichungstag und Bekanntmachung des Hinweises auf die Patenterteilung: **11.11.2026**
(21) Anmeldenummer: 22728082.3
(22) Anmeldetag: 05.05.2022
(51) Int. Cl.: B01D 24/10, B01D 35/153

(54) **AUFBEREITUNGSKARTUSCHE FÜR EINE FLUIDAUFBEREITUNGSVORRICHTUNG**
PROCESSING CARTRIDGE FOR A FLUID-PROCESSING DEVICE
CARTOUCHE DE TRAITEMENT POUR UN DISPOSITIF DE TRAITEMENT DE FLUIDE

(30) Priorität: 06.05.2021 DE 102021111803
(43) Veröffentlichungstag der Anmeldung: 13.03.2024
(73) Patentinhaber: Hengst SE, 48147 Münster (DE)
(72) Erfinder: VON LÜTZAU, Mark, 48157 Münster (DE); HUNDT, Jens, 48282 Emsdetten (DE)
(74) Vertreter: Pelster Behrends Patentanwälte PartG mbB
(86) Internationale Anmeldenummer: PCT/EP2022/062087
(87) Internationale Veröffentlichungsnummer: WO 2022/233990

(56) Entgegenhaltungen:
- EP-B1- 2 129 902
- WO-A1-2017/050366
- WO-A1-2017/050368
- DE-A1- 102006 044 746
- DE-A1- 102016 211 633
- DE-A1- 102018 221 261
- US-A1- 2013 068 684

## Beschreibung

Die Erfindung betrifft eine Aufbereitungskartusche für eine Fluidaufbereitungsvorrichtung.

Ferner betrifft die Erfindung eine Fluidaufbereitungsvorrichtung zum Aufbereiten eines Fluids.

Aus der Druckschrift WO 2017/050366 A1 ist eine Filteranordnung zur Fluidfiltration bekannt. Aus der Druckschrift DE 10 2016 211 633 A1 ist eine Verschlusseinrichtung für eine Filtereinrichtung bekannt.

Aus der Druckschrift DE 10 2018 221 261 A1 ist eine Baugruppe für eine Filtereinrichtung bekannt. Aus der Druckschrift DE 10 2006 044 746 A1 ist ein Wasserfilter-Kartuschensystem bekannt. Aus der Druckschrift EP 2 129 902 B1 ist ein Flüssigkeitsfilter bekannt. Aus der Druckschrift WO 2017/050368 A1 ist ein Filtereinsatz und eine Filteranordnung bekannt.

Aus der Druckschrift DE 103 53 424 B4 ist ein Ölfilter für ein Kraftfahrzeug bekannt, bei welchem der Kartuschenkörper eine obere und eine untere Endscheibe aufweist, wobei zwischen der oberen und der unteren Endscheibe ein von dem zu filternden Öl durchströmbares Aufbereitungsmaterial in Form eines Ringfilterelements angeordnet ist.

Die Druckschrift US 7,617,939 B2 offenbart einen Wasserfilter, bei welchem die Aufbereitungskartusche als Wasserfilterkartusche ausgebildet ist.

Bei verschiedenen Fluidaufbereitungsvorrichtungen besteht das Problem, dass die Fluidventile, mit welchen der Fluidzufluss in die Fluidaufbereitungsvorrichtung hinein und der Fluidabfluss aus der Fluidaufbereitungsvorrichtung hinaus freigegeben und unterbrochen werden kann, beim Wechseln der Aufbereitungskartusche nicht automatisch schließen bzw. öffnen. Fluidaufbereitungsvorrichtungen, welche beim Wechseln der Aufbereitungskartusche automatisch schließen bzw. öffnen, weisen bisher eine komplexe und fehleranfällige Konstruktion auf oder die Ventilbetätigung arbeitet nicht ausreichend zuverlässig.

Die der Erfindung zugrundeliegende Aufgabe besteht somit darin, die automatische Ventilbetätigung beim Wechseln der Aufbereitungskartusche von Fluidaufbereitungsvorrichtungen zu verbessern.

Die Aufgabe wird gelöst durch eine Aufbereitungskartusche gemäß Anspruch 1.

Die Erfindung macht sich die Erkenntnis zunutze, dass die Drehbewegung des das Aufbereitungsmaterial tragenden Kartuschenkörpers oder eines Teils davon zur Ventilbetätigung genutzt werden kann, sodass beim Ausbau der Aufbereitungskartusche und beim Einbau der Aufbereitungskartusche zwangsläufig eine Ventilbetätigung erfolgt. Somit können die Fluidventile der Fluidaufbereitungsvorrichtung beim Ausbau der Aufbereitungskartusche durch eine Drehbewegung des Kartuschenkörpers oder eines Teils des Kartuschenkörpers geschlossen werden. Ferner können die Fluidventile der Fluidaufbereitungsvorrichtung beim Einbau der Aufbereitungskartusche durch eine Drehbewegung des Kartuschenkörpers oder eines Teils des Kartuschenkörpers geöffnet werden. Das Risiko, dass sich die Fluidventile der Fluidaufbereitungsvorrichtung nach dem Ausbau der Aufbereitungskartusche in einem geöffneten Zustand befinden, wird somit zuverlässig eliminiert.

Das Aufbereitungsmaterial kann beispielsweise ein Ionentauscher-Harz sein, welches sich in einer Aufnahmekammer des Kartuschenkörpers befindet. In einem Kühlflüssigkeitskreislauf einer Brennstoffzelle werden kontinuierlich Ionen freigesetzt. Dies führt zu einer erhöhten Leitfähigkeit der Kühlflüssigkeit, sodass der Einbau einer Fluidaufbereitungsvorrichtung im Kühlkreislauf zur Reduzierung der elektrischen Leitfähigkeit der Kühlflüssigkeit erforderlich ist. Dadurch, dass das Fluid das Aufbereitungsmaterial durchströmt, wird die elektrische Leitfähigkeit des Fluids reduziert und kann somit auf einem niedrigen Niveau gehalten werden. Das Aufbereitungsmaterial sorgt also für einen effektiven Schutz gegen elektrische Kurzschlüsse. Die Aufbereitungskartusche kann also eine austauschbare bzw. auswechselbare Ionentauscher-Kartusche oder ein austauschbarer bzw. auswechselbarer Ionentauscher-Filtereinsatz sein.

Alternativ kann die Aufbereitungskartusche auch ein Filtereinsatz für einen Flüssigkeitsfilter oder einen Gasfilter sein. In diesem Fall wäre die Fluidaufbereitungsvorrichtung also ein Flüssigkeitsfilter oder ein Gasfilter. Der Flüssigkeitsfilter kann als Ölfilter oder Kraftstofffilter ausgebildet sein. Der Gasfilter kann als Luftfilter ausgebildet sein. In diesen Fällen kann das Aufbereitungsmaterial beispielsweise ein von dem aufzubereitenden Fluid durchströmbarer Filterstoff, ein Ab- oder Adsorbermaterial oder ein lonentauschermaterial sein. Insbesondere ist das Aufbereitungsmaterial in diesem Fall ein ringförmiger bzw. umlaufender Faltenbalg. Der Kartuschenkörper wäre in diesem Fall eine Trägerstruktur für den Filterstoff, wobei diese Trägerstruktur beispielsweise eine obere Endscheibe und/oder eine untere Endscheibe aufweisen kann, welche stirnseitig von dem Filterstoff angeordnet sind.

Die mehreren Ventilbetätigungsflächen können an dem Kartuschenkörper angeordnet sein. Im Falle von mehreren Ventilbetätigungsflächen sind diese vorzugsweise beabstandet voneinander angeordnet.

Vorzugsweise ist die Aufbereitungskartusche dazu eingerichtet, in eine Kartuschenaufnahmestruktur der Fluidaufbereitungsvorrichtung eingesetzt zu werden, sodass die Drehbewegung des Kartuschenkörpers oder des Teils des Kartuschenkörpers in einer Aufnahmekammer der Kartuschenaufnahmestruktur ausgeführt wird.

Erfindungsgemäß befinden sich die mehreren Ventilbetätigungsflächen an mehreren an dem Kartuschenkörper angeordneten Betätigungselementen der Ventilbetätigungseinrichtung. Zwei Betätigungselemente erstrecken sich in Axialrichtung nach außen.

Die Ventilbetätigungsfläche an einem Betätigungselement kann an einer axialen oder radialen Außenseite des jeweiligen Betätigungselements angeordnet sein und dient zur Druckbetätigung eines Fluidventils der Fluidaufbereitungsvorrichtung. Die Ventilbetätigungsfläche eines oder mehrerer Betätigungselemente kann radial oder axial nach außen ausgerichtet sein. Ein Betätigungselement weist eine, insbesondere wendelartige und/oder eine Steigung aufweisende, Druckbetätigungskontur auf, welche mit einem Ventilkörper zur Druckbetätigung des Fluidventils in Kontakt und/oder in Eingriff bringbar ist. Die Ventilbetätigungsfläche des zur Druckbetätigung dienenden Betätigungselements ist vorzugsweise an einer dem Kartuschenkörper abgewandten Außenseite des Betätigungselements angeordnet.

Die Ventilbetätigungsfläche eines oder mehrerer Betätigungselemente kann alternativ an einer Innenseite des jeweiligen Betätigungselements angeordnet sein und zur Zugbetätigung eines Fluidventils der Fluidaufbereitungsvorrichtung dienen. Die Ventilbetätigungsfläche eines oder mehrerer Betätigungselemente kann radial oder axial nach innen ausgerichtet sein. Ein Betätigungselement weist eine, insbesondere wendelartige und/oder eine Steigung aufweisende, Zugbetätigungskontur auf, welche mit einem Ventilkörper zur Zugbetätigung des Fluidventils in Kontakt und/oder in Eingriff bringbar ist. Die Ventilbetätigungsfläche des zur Zugbetätigung dienenden Betätigungselements ist vorzugsweise an einer dem Kartuschenkörper zugewandten Innenseite des Betätigungselements angeordnet.

Die Aufbereitungskartusche kann beispielsweise zwei zur Zugbetätigung von Fluidventilen dienende Betätigungselemente aufweisen. Die Aufbereitungskartusche kann beispielsweise zwei zur Druckbetätigung von Fluidventilen dienende Betätigungselemente aufweisen. Die Aufbereitungskartusche weist ein zur Zugbetätigung eines Fluidventils dienendes Betätigungselement und ein zur Druckbetätigung eines anderen Fluidventils dienendes Betätigungselement auf, wobei die Betätigungselemente auf derselben Stirnseite des Kartuschenkörpers angeordnet sind.

Der Kartuschenkörper weist vorzugsweise einen eine Aufnahmekammer für das Aufbereitungsmaterial bereitstellenden Basiskörper und einen Kartuschendeckel für eine Befüllöffnung des Basiskörpers auf, wobei ein oder mehrere Ventilbetätigungsflächen oder Betätigungselemente der Ventilbetätigungseinrichtung an dem Basiskörper und/oder dem Kartuschendeckel angeordnet sind. Der Basiskörper und/oder der Kartuschendeckel können jeweils eine Perforierung oder eine Siebstruktur aufweisen, welche verhindern, dass das granulare Aufbereitungsmaterial die Aufnahmekammer verlässt. Die Perforierung kann stirnseitig, beispielsweise oben oder unten, und/oder entlang einer Umfangsfläche des Kartuschenkörpers, also seitlich, angeordnet sein. Der Kartuschendeckel kann form-, kraft- und/oder stoffschlüssig mit dem Basiskörper verbunden sein. Beispielsweise ist der Kartuschendeckel auf den Basiskörper geklipst. Hierzu kann der Kartuschendeckel und/oder der Basiskörper ein oder mehrere Schnapphaken aufweisen.

In einer anderen bevorzugten Ausführungsform der erfindungsgemäßen Aufbereitungskartusche umfasst der Kartuschenkörper eine umlaufende Außenbewandung, wobei ein oder mehrere Ventilbetätigungsflächen der Ventilbetätigungseinrichtung an der umlaufenden Außenbewandung des Kartuschenkörpers angeordnet sind. Wenn mehrere Ventilbetätigungsflächen an der umlaufenden Außenbewandung des Kartuschenkörpers angeordnet sind, können diese einen Höhenversatz und/oder einen Winkelversatz zueinander aufweisen. Ferner können die Ventilbetätigungsflächen auf der gleichen Höhe und/oder gegenüberliegend angeordnet sein. Wenn die Ventilbetätigungseinrichtung ein oder mehrere Betätigungselemente aufweist, erstrecken sich ein oder mehrere Betätigungselemente der Ventilbetätigungseinrichtung von der umlaufenden Außenbewandung des Kartuschenkörpers, insbesondere in Radialrichtung, nach außen. Wenn mehrere Betätigungselemente vorhanden sind, können diese einen Höhenversatz und/oder einen Winkelversatz zueinander aufweisen. Die Betätigungselemente können auch auf gleicher Höhe und/oder gegenüberliegend angeordnet sein.

Wenn mehrere Ventilbetätigungsflächen der Ventilbetätigungseinrichtung an der umlaufenden Außenbewandung des Kartuschenkörpers angeordnet sind, dienen diese vorzugsweise zur Betätigung von Fluidventilen, welche in der umlaufenden Bewandung der Kartuschenaufnahmestruktur der Fluidaufbereitungsvorrichtung, also seitlich von der Aufbereitungskartusche, angeordnet sind. In diesem Fall befindet sich der außerhalb der Aufbereitungskartusche liegende Bereich, der von dem noch aufzubereitenden Fluid durchströmt wird, oberhalb oder unterhalb des außerhalb der Aufbereitungskartusche liegenden Bereichs, der von dem bereits aufbereiteten Fluid durchströmt wird. Diese Bereiche müssen über eine Dichtung voneinander getrennt werden. Diese Dichtung kann sich beispielsweise entlang des Außenumfangs der Aufbereitungskartusche erstrecken. Auch wenn ein Fluidventil seitlich und das andere Fluidventil am Boden der Kartuschenaufnahmestruktur der Fluidaufbereitungsvorrichtung angeordnet ist, kann die Trennung der Strömungsbereiche durch eine Dichtung am Außenumfang der Aufbereitungskartusche erfolgen.

Bei der erfindungsgemäßen Aufbereitungskartusche umfasst der Kartuschenkörper eine stirnseitige Außenbewandung, wobei sich mehrere Betätigungselemente der Ventilbetätigungseinrichtung von der stirnseitigen Außenbewandung in Axialrichtung nach außen erstrecken. Die stirnseitige Außenbewandung, an welcher eine oder mehrere Betätigungselemente angeordnet sind, kann der Boden des Basiskörpers sein. Das eine oder die mehreren Betätigungselemente können sich von dem Boden des Basiskörpers nach außen erstrecken. Beispielsweise erstrecken sich zwei Betätigungselemente der Ventilbetätigungseinrichtung vom stirnseitigen Boden des Basiskörpers in Axialrichtung nach außen. Die stirnseitige Außenbewandung, an welcher eine oder mehrere Betätigungselemente angeordnet sind, kann ferner Bestandteil des Kartuschendeckels sein. Das eine oder die mehreren Betätigungselemente können sich von dem Kartuschendeckel nach außen erstrecken. Beispielsweise erstrecken sich zwei Betätigungselemente der Ventilbetätigungseinrichtung vom stirnseitigen Kartuschendeckel in Axialrichtung nach außen.

Bei der erfindungsgemäßen Aufbereitungskartusche sind die mehreren Betätigungselemente jeweils als Stege ausgebildet, welche sich jeweils entlang eines Kreisbahnteilabschnitts erstrecken. Die Stege sind vorzugsweise als hervorstehende bzw. nach außen ragende Flügel ausgebildet. Ein erstes als Steg ausgebildetes Betätigungselement erstreckt sich entlang eines ersten Kreisbahnteilabschnitts und ein zweites als Steg ausgebildetes Betätigungselement erstreckt sich entlang eines zweiten Kreisbahnteilabschnitts. Der erste Kreisbahnteilabschnitt und der zweite Kreisbahnteilabschnitt weisen unterschiedliche Kreisbahndurchmesser auf. Der erste Kreisbahnteilabschnitt und der zweite Kreisbahnteilabschnitt sind vorzugsweise beabstandet voneinander und/oder koaxial zueinander angeordnet. Die Kreisbahnteilabschnitte, entlang welchen sich die jeweiligen Betätigungselemente erstrecken, erstrecken sich vorzugsweise über einen Winkelbereich von weniger als 180 Grad, insbesondere über einen Winkelbereich von weniger als 90 Grad, besonders bevorzugt über einen Winkelbereich von weniger als 45 Grad. Insofern ist lediglich eine geringfügige Drehbewegung an dem Kartuschenkörper oder dem Teil des Kartuschenkörpers zur Ventilbetätigung umzusetzen.

In einer bevorzugten Ausführungsform weist die erfindungsgemäße Aufbereitungskartusche einen Kartuschenkörper zur Aufnahme eines von dem aufzubereitenden Fluid durchströmbaren Aufbereitungsmaterials auf, wobei der Kartuschenkörper eine stirnseitige Außenbewandung umfasst. Ferner umfasst die Aufbereitungskartusche eine Ventilbetätigungseinrichtung mit mehreren Ventilbetätigungsflächen zur Kontaktbetätigung mehrerer jeweils einen Ventilkörper aufweisender Fluidventile der Fluidaufbereitungsvorrichtung, wobei sich die mehreren Ventilbetätigungsflächen an mehreren an dem Kartuschenkörper angeordneten Betätigungselementen der Ventilbetätigungseinrichtung befinden, welche sich von der stirnseitigen Außenbewandung nach außen erstrecken, wobei die mehreren Ventilbetätigungsflächen jeweils dazu eingerichtet sind, sich bei einer Drehbewegung des Kartuschenkörpers oder eines Teils des Kartuschenkörpers entlang eines Betätigungspfads zu bewegen und durch die Bewegung entlang des Betätigungspfads ein Fluidventil der Fluidaufbereitungsvorrichtung durch Bewegen des Ventilkörpers in Axialrichtung zu betätigen, wobei die mehreren Betätigungselemente jeweils als Stege ausgebildet sind, welche sich jeweils entlang eines Kreisbahnteilabschnitts erstrecken, wobei die Kreisbahnteilabschnitte, entlang welchen sich die Betätigungselemente erstrecken, unterschiedliche Durchmesser aufweisen.

In einer anderen Ausführungsform weist Aufbereitungskartusche einen Kartuschenkörper zur Aufnahme eines von dem aufzubereitenden Fluid durchströmbaren Aufbereitungsmaterials und eine Ventilbetätigungseinrichtung mit mehreren Ventilbetätigungsflächen zur Kontaktbetätigung mehrerer Fluidventile der Fluidaufbereitungsvorrichtung auf, wobei die mehreren Ventilbetätigungsflächen jeweils dazu eingerichtet sind, sich bei einer Drehbewegung des Kartuschenkörpers oder eines Teils des Kartuschenkörpers entlang eines Betätigungspfads zu bewegen und durch die Bewegung entlang des Betätigungspfads ein Fluidventil der Fluidaufbereitungsvorrichtung zu betätigen, wobei sich die mehreren Ventilbetätigungsflächen an mehreren an dem Kartuschenkörper angeordneten Betätigungselementen der Ventilbetätigungseinrichtung befinden, wobei eine Ventilbetätigungsfläche eines eine Zugbetätigungskontur aufweisenden Betätigungselements an einer Innenseite des Betätigungselements angeordnet und vorzugsweise dem Kartuschenkörper zugewandt ist, wobei die Zugbetätigungskontur mit einem Ventilkörper eines Fluidventils zur Zugbetätigung des Fluidventils in Eingriff bringbar ist.

Die erfindungsgemäße Aufbereitungskartusche wird ferner dadurch vorteilhaft weitergebildet, dass die Höhe der Stege zumindest innerhalb eines Bereichs des Kreisbahnteilabschnitts rampenartig zunimmt. Durch die rampenartig zunehmende Steghöhe kann erreicht werden, dass die Ventilbetätigungsflächen bei einer Drehbewegung des Kartuschenkörpers oder bei einer Drehbewegung eines Teils des Kartuschenkörpers in Richtung eines Fluidventils oder von einem Fluidventil wegbewegt werden, sodass eine Kontaktbetätigung des Fluidventils umgesetzt wird.

In einer anderen bevorzugten Ausführungsform der erfindungsgemäßen Aufbereitungskartusche weisen ein oder mehrere Betätigungselemente eine Wendel- oder Spiralform auf. Auch eine Wendel- oder Spiralform erlaubt eine Kontaktbetätigung eines feststehenden Fluidventils durch die Drehbewegung des Kartuschenkörpers oder durch die Drehbewegung eines Teils des Kartuschenkörpers. Wenn der Kartuschenkörper einen Kartuschendeckel aufweist, kann ein oder können mehrere wendel- oder spiralförmige Betätigungselemente an dem Kartuschendeckel angeordnet sein. Wenn der Kartuschenkörper eine obere Endscheibe und/oder eine untere Endscheibe aufweist, kann ein oder können mehrere wendel- oder spiralförmige Betätigungselemente an der oberen Endscheibe oder an der unteren Endscheibe angeordnet sein. Ferner kann ein oder können mehrere wendel- oder spiralförmige Betätigungselemente an einer die obere und die untere Endscheibe verbindenden Verbindungsstruktur angeordnet sein. Bei mehreren wendel- oder spiralförmigen Betätigungselementen erstrecken diese sich vorzugsweise entlang voneinander beabstandeter Umlaufbahnen, insbesondere entlang voneinander beabstandeter und/oder koaxialer Kreisbahnen.

Die erfindungsgemäße Aufbereitungskartusche wird ferner durch eine Drehführung vorteilhaft weitergebildet, über welche der Kartuschenkörper oder ein Teil des Kartuschenkörpers während der Drehbewegung geführt wird. Die Drehführung kann durch einen Führungsring bzw. einen umlaufenden Steg an der Unterseite des Kartuschenkörpers gebildet werden. Dieser Führungsring kann gleichzeitig als Dichtung fungieren und aus einem abdichtenden Material ausgebildet oder mit einem abdichtenden Material beschichtet sein.

Die erfindungsgemäße Aufbereitungskartusche wird ferner dadurch vorteilhaft weitergebildet, dass die Drehführung dazu eingerichtet ist, während der Drehbewegung des Kartuschenkörpers oder eines Teils des Kartuschenkörpers eine Exzenterbewegung des Kartuschenkörpers oder eines Teils des Kartuschenkörpers zu verursachen. Hierzu kann der Führungsring an der Unterseite des Kartuschenkörpers beispielsweise außermittig angeordnet sein. Die Mittelachse des Kartuschenkörpers und die die Drehachse vorgebende Mittelachse des Führungsrings sind dabei vorzugsweise beabstandet voneinander. Durch die Exzenterbewegung des Kartuschenkörpers oder des Teils des Kartuschenkörpers können die Ventilbetätigungsflächen in Richtung der Fluidventile, welche im Umfangsbereich angeordnet sind, bewegt werden, um somit eine Ventilbetätigung umzusetzen.

Die erfindungsgemäße Aufbereitungskartusche wird ferner durch eine eine Mitnahmekontur aufweisende Drehbetätigungseinrichtung weitergebildet, über welche eine Drehbewegung auf den Kartuschenkörper oder einen Teil des Kartuschenkörpers übertragbar ist. Als Mitnahmekontur kommt jede einen Formschluss erlaubende Mitnahmekontur in Frage. Vorzugsweise wird mit der Mitnahmekontur eine mehreckige Ausnehmung oder ein mehreckiger Stegverlauf gebildet. Beispielsweise weist der Gehäusedeckel der Kartuschenaufnahmestruktur der Fluidaufbereitungsvorrichtung eine mit der Mitnahmekontur korrespondierende Eingriffskontur auf, über welche dann eine Drehbewegung des Gehäusedeckels auf den Kartuschenkörpers oder einen Teil des Kartuschenkörpers übertragen werden kann.

Die der Erfindung zugrundeliegende Aufgabe wird ferner durch eine Fluidaufbereitungsvorrichtung gemäß Anspruch 8 gelöst.

Die mehreren Ventilbetätigungsflächen werden von der Aufbereitungskartusche getragen. Die mehreren Fluidventile werden somit beim Verdrehen der Aufbereitungskartusche durch die mehreren Ventilbetätigungsflächen betätigt, insbesondere geöffnet oder geschlossen.

Erfindungsgemäß ist die Ventilbetätigungseinrichtung an der Aufbereitungskartusche ausgebildet und die Aufbereitungskartusche ist nach einer der vorstehend beschriebenen Ausführungsformen ausgebildet. Hinsichtlich der Vorteile und Modifikationen dieser Fluidaufbereitungsvorrichtung wird zunächst auf die Vorteile und Modifikationen der erfindungsgemäßen Aufbereitungskartusche verwiesen.

In einer bevorzugten Ausführungsform der erfindungsgemäßen Fluidaufbereitungsvorrichtung ist ein Fluidventil als Einlassventil ausgebildet. Das Einlassventil ist an oder in einer umlaufenden Bewandung der Kartuschenaufnahmestruktur der Fluidaufbereitungsvorrichtung angeordnet, wobei eine sich an der umlaufenden Außenbewandung des Kartuschenkörpers befindende Ventilbetätigungsfläche oder eine Ventilbetätigungsfläche eines sich von der umlaufenden Außenbewandung des Kartuschenkörpers nach außen erstreckenden Betätigungselements dazu eingerichtet ist, bei einer Drehbewegung des Kartuschenkörpers oder eines Teils des Kartuschenkörpers das Einlassventil in einen geschlossenen Zustand oder einen geöffneten Zustand zu verbringen. Ein als Einlassventil ausgebildetes Fluidventil kann ferner an oder in einer stirnseitigen Bewandung der Fluidaufbereitungsvorrichtung angeordnet sein, wobei eine Ventilbetätigungsfläche eines sich von der stirnseitigen Außenbewandung des Kartuschenkörpers nach außen erstreckenden Betätigungselements dazu eingerichtet ist, bei einer Drehbewegung des Kartuschenkörpers oder eines Teils des Kartuschenkörpers das Einlassventil in einen geschlossenen Zustand oder einen geöffneten Zustand zu verbringen.

In einer weiteren bevorzugten Ausführungsform der erfindungsgemäßen Fluidaufbereitungsvorrichtung ist ein Fluidventil als Auslassventil ausgebildet und vorzugsweise an oder in einer umlaufenden Bewandung der Kartuschenaufnahmestruktur der Fluidaufbereitungsvorrichtung angeordnet. Eine sich an der umlaufenden Außenbewandung des Kartuschenkörpers befindende Ventilbetätigungsfläche oder eine Ventilbetätigungsfläche eines sich von der umlaufenden Außenbewandung des Kartuschenkörpers nach außen erstreckenden Betätigungselements ist vorzugsweise dazu eingerichtet, bei einer Drehbewegung des Kartuschenkörpers oder eines Teils des Kartuschenkörpers das Auslassventil in einen geschlossenen Zustand oder einen geöffneten Zustand zu verbringen. Ein als Auslassventil ausgebildetes Fluidventil kann ferner an oder in einer stirnseitigen Bewandung der Kartuschenaufnahmestruktur der Fluidaufbereitungsvorrichtung angeordnet sein, wobei eine Ventilbetätigungsfläche eines sich von der stirnseitigen Außenbewandung des Kartuschenkörpers nach außen erstreckenden Betätigungselements dazu eingerichtet ist, bei einer Drehbewegung des Kartuschenkörpers oder eines Teils des Kartuschenkörpers das Auslassventil in einen geschlossenen Zustand oder einen geöffneten Zustand zu verbringen. Wenn das Ventil als Auslassventil ausgebildet ist, kann es beispielsweise auch als Ablassventil fungieren, beispielsweise wenn die Fluidaufbereitungsvorrichtung als Kraftstofffilter oder als Ölfilter ausgebildet ist.

Die erfindungsgemäße Fluidaufbereitungsvorrichtung wird ferner dadurch vorteilhaft weitergebildet, dass die Kartuschenaufnahmestruktur einen einen Kartuschenaufnahmebereich umfassenden Gehäusegrundkörper und einen Gehäusedeckel für eine Aufnahmeöffnung des Gehäusegrundkörpers aufweist, wobei der Gehäusedeckel über eine Drehverriegelung an dem Gehäusegrundkörper befestigbar ist. Der Gehäusedeckel ist also relativ zu dem Gehäusegrundkörper zu verdrehen, um den Gehäusedeckel an dem Gehäusegrundkörper zu fixieren und den Gehäusedeckel von dem Gehäusegrundkörper zu lösen. Die Drehverriegelung kann beispielsweise als Bajonett-Verschluss ausgebildet sein. Alternativ kann die Drehverriegelung ein durchgängiges bzw. umlaufendes Gewinde oder mehrere beabstandete Gewindesegmente an dem Gehäusegrundkörper und dem Gehäusedeckel umfassen, wobei die Gewindesegmente in Umfangsrichtung voneinander beabstandet sind. Über die Segmentierung des Gewindes kann der Gehäusedeckel so eingesetzt werden, dass bei einer Drehbewegung direkt mehrere Gewindegänge miteinander in Eingriff kommen. Somit kann mit einer vergleichsweise kleinen Drehbewegung am Gehäusedeckel eine Drehverriegelung des Gehäuses umgesetzt werden.

Die Aufbereitungskartusche kann auch mit der Kartuschenaufnahmestruktur der Fluidaufbereitungsvorrichtung verbunden sein. Beispielsweise ist die Aufbereitungskartusche fest, beispielsweise kraft-, form- und/oder stoffschlüssig, mit dem Gehäusedeckel der Fluidaufbereitungsvorrichtung verbunden. Die Aufbereitungskartusche und der Gehäusedeckel der Fluidaufbereitungsvorrichtung können auch zerstörungsfrei lösbar miteinander verbunden sein.

Ferner kann die Ventilbetätigungseinrichtung am Gehäusedeckel der Kartuschenaufnahmestruktur der Fluidaufbereitungsvorrichtung ausgebildet sein. In diesem Fall kann beispielsweise ein Fluidventil als Einlassventil ausgebildet sein. Das Einlassventil ist an oder in einer umlaufenden Bewandung der Kartuschenaufnahmestruktur der Fluidaufbereitungsvorrichtung angeordnet, wobei eine sich an dem Gehäusedeckel de Kartuschenaufnahmestruktur der Fluidaufbereitungsvorrichtung befindende Ventilbetätigungsfläche oder eine Ventilbetätigungsfläche eines sich von dem Gehäusedeckel der Kartuschenaufnahmestruktur der Fluidaufbereitungsvorrichtung nach außen erstreckenden Betätigungselements dazu eingerichtet ist, bei einer Drehbewegung des Gehäusedeckels der Kartuschenaufnahmestruktur der Fluidaufbereitungsvorrichtung das Einlassventil in einen geschlossenen Zustand oder einen geöffneten Zustand zu verbringen. Ein als Einlassventil ausgebildetes Fluidventil kann ferner an oder in einer stirnseitigen Bewandung der Fluidaufbereitungsvorrichtung angeordnet sein, wobei eine Ventilbetätigungsfläche eines sich von dem Gehäusedeckel der Kartuschenaufnahmestruktur der Fluidaufbereitungsvorrichtung nach außen erstreckenden Betätigungselements dazu eingerichtet ist, bei einer Drehbewegung des Gehäusedeckels der Kartuschenaufnahmestruktur der Fluidaufbereitungsvorrichtung das Einlassventil in einen geschlossenen Zustand oder einen geöffneten Zustand zu verbringen. Ferner kann ein Fluidventil als Auslassventil ausgebildet sein und vorzugsweise an oder in einer umlaufenden Bewandung der Kartuschenaufnahmestruktur der Fluidaufbereitungsvorrichtung angeordnet. Eine sich an dem Gehäusedeckel der Kartuschenaufnahmestruktur der Fluidaufbereitungsvorrichtung befindende Ventilbetätigungsfläche oder eine Ventilbetätigungsfläche eines sich von dem Gehäusedeckel der Kartuschenaufnahmestruktur der Fluidaufbereitungsvorrichtung nach außen erstreckenden Betätigungselements ist vorzugsweise dazu eingerichtet, bei einer Drehbewegung des Gehäusedeckels der Kartuschenaufnahmestruktur der Fluidaufbereitungsvorrichtung das Auslassventil in einen geschlossenen Zustand oder einen geöffneten Zustand zu verbringen. Ein als Auslassventil ausgebildetes Fluidventil kann ferner an oder in einer stirnseitigen Bewandung der Kartuschenaufnahmestruktur der Fluidaufbereitungsvorrichtung angeordnet sein, wobei eine Ventilbetätigungsfläche eines sich von dem Gehäusedeckel der Kartuschenaufnahmestruktur der Fluidaufbereitungsvorrichtung nach außen erstreckenden Betätigungselements dazu eingerichtet ist, bei einer Drehbewegung des Gehäusedeckels der Kartuschenaufnahmestruktur der Fluidaufbereitungsvorrichtung das Auslassventil in einen geschlossenen Zustand oder einen geöffneten Zustand zu verbringen.

In einer weiteren bevorzugten Ausführungsform der erfindungsgemäßen Fluidaufbereitungsvorrichtung ist die Aufbereitungskartusche kinematisch mit dem Gehäusedeckel gekoppelt, sodass eine Drehbewegung des Gehäusedeckels zum Schließen der Drehverriegelung dazu führt, dass sich zumindest eine Ventilbetätigungsfläche entlang des Betätigungspfads bewegt und ein Fluidventil von dem geschlossen Zustand in den geöffneten Zustand verbringt. Alternativ oder zusätzlich ist die Aufbereitungskartusche kinematisch mit dem Gehäusedeckel gekoppelt, sodass eine Drehbewegung des Gehäusedeckels zum Öffnen der Drehverriegelung dazu führt, dass sich zumindest eine Ventilbetätigungsfläche entlang des Betätigungspfads bewegt und eine Verbringung eines Fluidventils von dem geöffneten Zustand in den geschlossenen Zustand veranlasst. Der Gehäusedeckel weist hierzu vorzugsweise eine Eingriffskontur auf, welche in die Mitnahmekontur der Drehbetätigungseinrichtung der Aufbereitungskartusche eingreift.

Nachfolgend werden bevorzugte Ausführungsformen unter Bezugnahme auf die beiliegenden Zeichnungen näher erläutert und beschrieben. Dabei zeigen:
- Fig. 1: eine nicht-erfindungsgemäße Fluidaufbereitungsvorrichtung in der perspektivischen Darstellung;
- Fig. 2: die in der Fig. 1 abgebildete Fluidaufbereitungsvorrichtung in einer Explosionsdarstellung;
- Fig. 3: die in der Fig. 1 abgebildete Fluidaufbereitungsvorrichtung in einer ersten Konfiguration;
- Fig. 4: die in der Fig. 1 abgebildete Fluidaufbereitungsvorrichtung in einer zweiten Konfiguration;
- Fig. 5: die in der Fig. 1 abgebildete Fluidaufbereitungsvorrichtung mit abgehobenem Gehäusedeckel;
- Fig. 6: die Aufbereitungskartusche der in der Fig. 1 abgebildeten Fluidaufbereitungsvorrichtung;
- Fig. 7: die in der Fig. 6 abgebildete Aufbereitungskartusche in einer Seitenansicht;
- Fig. 8: die in der Fig. 6 abgebildete Aufbereitungskartusche in einer Schnittdarstellung;
- Fig. 9: die in der Fig. 6 abgebildete Aufbereitungskartusche in einer Draufsicht;
- Fig. 10: die in der Fig. 1 abgebildete Fluidaufbereitungsvorrichtung in einer Schnittdarstellung mit geschlossenen Fluidventilen;
- Fig. 11: eine Detaildarstellung eines Betätigungselements der in der Fig. 10 abgebildeten Aufbereitungskartusche;
- Fig. 12: eine Detaildarstellung eines weiteren Betätigungselements der in der Fig. 10 abgebildeten Aufbereitungskartusche;
- Fig. 13: die in der Fig. 1 abgebildete Fluidaufbereitungsvorrichtung in einer Schnittdarstellung mit geöffneten Fluidventilen;
- Fig. 14: eine Detaildarstellung eines Betätigungselements der in der Fig. 13 abgebildeten Aufbereitungskartusche;
- Fig. 15: eine Detaildarstellung eines weiteren Betätigungselements der in der Fig. 13 abgebildeten Aufbereitungskartusche;
- Fig. 16: eine Detaildarstellung eines Kartuschendeckels einer erfindungsgemäßen Aufbereitungskartusche;
- Fig. 17: eine nicht-erfindungsgemäße Fluidaufbereitungsvorrichtung in einer ersten Konfiguration;
- Fig. 18: die in der Fig. 17 abgebildete Fluidaufbereitungsvorrichtung in einer zweiten Konfiguration;
- Fig. 19: eine nicht-erfindungsgemäße Aufbereitungskartusche in einer Seitenansicht;
- Fig. 20: die in der Fig. 19 abgebildete Aufbereitungskartusche in einer Schnittdarstellung;
- Fig. 21: die in der Fig. 19 abgebildete Aufbereitungskartusche in einer Draufsicht;
- Fig. 22: eine nicht-erfindungsgemäße Aufbereitungskartusche in einer Seitenansicht;
- Fig. 23: die in der Fig. 22 abgebildete Aufbereitungskartusche in einer Schnittdarstellung;
- Fig. 24: die in der Fig. 22 abgebildete Aufbereitungskartusche in einer Draufsicht;
- Fig. 25: eine nicht-erfindungsgemäße Fluidaufbereitungsvorrichtung;
- Fig. 26: eine Detaildarstellung eines Betätigungselements der in der Fig. 25 abgebildeten Aufbereitungskartusche mit geschnittener Kartuschenaufnahmestruktur;
- Fig. 27: eine weitere Detaildarstellung des Betätigungselements der in der Fig. 25 abgebildeten Aufbereitungskartusche ohne Kartuschenaufnahmestruktur;
- Fig. 28: eine nicht-erfindungsgemäße Fluidaufbereitungsvorrichtung in einer Schnittdarstellung;
- Fig. 29: eine Detaildarstellung des Kartuschendeckels der in der Fig. 28 abgebildeten Aufbereitungskartusche;
- Fig. 30: ein Ausführungsbeispiel der erfindungsgemäßen Fluidaufbereitungsvorrichtung in einer Explosionsdarstellung;
- Fig. 31: die in der Fig. 30 abgebildete Fluidaufbereitungsvorrichtung in einer perspektivischen Darstellung;
- Fig. 32: die in der Fig. 30 abgebildete Fluidaufbereitungsvorrichtung in einer Schnittdarstellung;
- Fig. 33: die Aufbereitungskartusche der in der Fig. 30 abgebildeten Fluidaufbereitungsvorrichtung in einer Seitenansicht;
- Fig. 34: den Boden der Aufbereitungskartusche der in der Fig. 30 abgebildeten Fluidaufbereitungsvorrichtung in einer perspektivischen Darstellung;
- Fig. 35: den Boden der Aufbereitungskartusche der in der Fig. 30 abgebildeten Fluidaufbereitungsvorrichtung in einer weiteren perspektivischen Darstellung;
- Fig. 36: Boden der Aufbereitungskartusche der in der Fig. 30 abgebildeten Fluidaufbereitungsvorrichtung in einer Draufsicht; und
- Fig. 37: den Deckel der Aufbereitungskartusche der in der Fig. 30 abgebildeten Fluidaufbereitungsvorrichtung in einer Draufsicht.

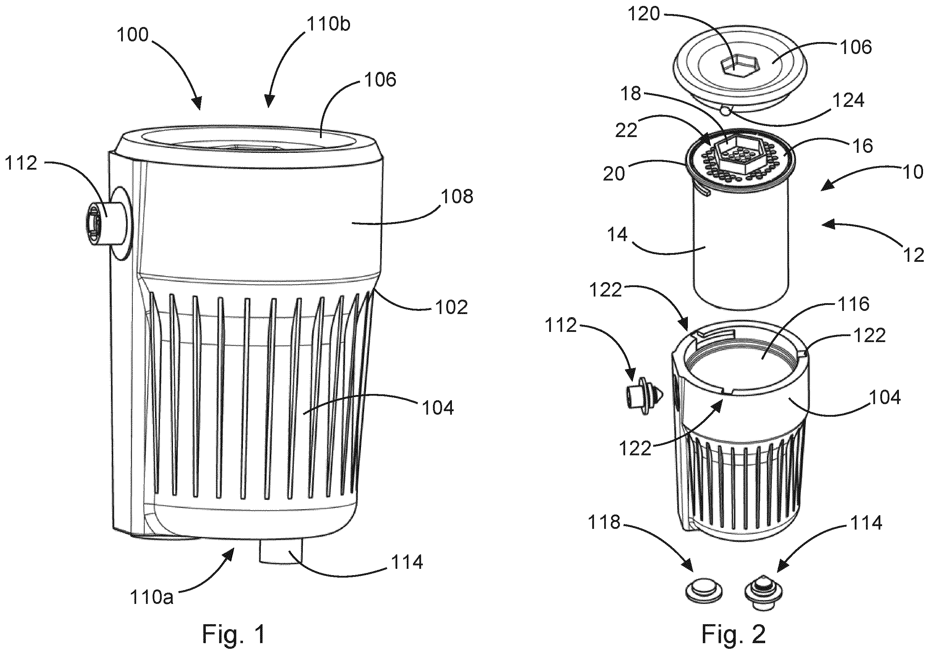

Die Fig. 1 zeigt eine Fluidaufbereitungsvorrichtung 100 zum Aufbereiten eines Fluids. Die Fluidaufbereitungsvorrichtung 100 ist ein Ionentauscher und dient zur Aufbereitung der Kühlflüssigkeit in einem Kühlflüssigkeitskreislauf einer Brennstoffzelle. In einem derartigen Kühlflüssigkeitskreislauf werden kontinuierlich Ionen freigesetzt, wobei die lonenfreisetzung zu einer sukzessiven Erhöhung der elektrischen Leitfähigkeit der Kühlflüssigkeit führt. Um elektrische Kurzschlüsse aufgrund der elektrischen Leitfähigkeit der Kühlflüssigkeit zu vermeiden, ist im Kühlkreislauf einer Brennstoffzelle eine entsprechende Fluidaufbereitungsvorrichtung 100 vorzusehen, mit welcher die elektrische Leitfähigkeit der Kühlflüssigkeit auf einem niedrigen Niveau gehalten werden kann.

Die Fluidaufbereitungsvorrichtung 100 umfasst eine mehrteilige Kartuschenaufnahmestruktur 102. Die mehrteilige Kartuschenaufnahmestruktur 102 umfasst einen becherförmigen Gehäusegrundkörper 104 und einen Gehäusedeckel 106. Die Kartuschenaufnahmestruktur 102 der Fluidaufbereitungsvorrichtung 100 umfasst eine umlaufende Bewandung 108 und stirnseitige Bewandungen 110a, 110b. Die umlaufende Bewandung 108 sowie die stirnseitige Bewandung 110a sind Bestandteile des Gehäusegrundkörpers 104, wobei die stirnseitige Bewandung 110a den Boden des Gehäusegrundkörpers 104 bildet. Die stirnseitige Bewandung 110b wird durch den Gehäusedeckel 106 gebildet.

Die Fluidaufbereitungsvorrichtung 100 umfasst ferner zwei Fluidventile 112, 114. Das Fluidventil 112 ist ein Einlassventil, über welches das aufzubereitende Fluid in die Kartuschenaufnahmestruktur 102 der Fluidaufbereitungsvorrichtung 100 einströmen kann. Das Fluidventil 114 ist ein Auslassventil, über welches das aufbereitete Fluid aus der Kartuschenaufnahmestruktur 102 der Fluidaufbereitungsvorrichtung 100 herausströmen kann. Die Strömungsrichtung kann jedoch auch umgekehrt sein, sodass das Fluidventil 114 ein Einlassventil ist, über welches das aufzubereitende Fluid in die Kartuschenaufnahmestruktur 102 der Fluidaufbereitungsvorrichtung 100 einströmen kann und das Fluidventil 112 ist ein Auslassventil, über welches das aufbereitete Fluid aus der Kartuschenaufnahmestruktur 102 der Fluidaufbereitungsvorrichtung 100 herausströmen kann.

Das Fluidventil 112 ist in der umlaufenden Bewandung 108 des Gehäusegrundkörpers 104 angeordnet. Das Fluidventil 114 ist in der bodenseitigen Bewandung 110a des Gehäusegrundkörpers 104 angeordnet.

Die Fig. 2 zeigt, dass der Gehäusegrundkörper 104 einen Kartuschenaufnahmebereich 116 aufweist, in welchen eine Aufbereitungskartusche 10 einsetzbar ist, wenn der Gehäusedeckel 106 von dem Gehäusegrundkörper 104 gelöst wurde.

Die Aufbereitungskartusche 10 ist eine austauschbare bzw. auswechselbare Ionentauscher-Kartusche. Die Aufbereitungskartusche 10 weist einen im Wesentlichen zylindrischen Kartuschenkörper 12 zur Aufnahme eines von dem aufzubereitenden Fluid durchströmbaren Aufbereitungsmaterials 44 auf. Der Kartuschenkörper 12 umschließt eine Aufnahmekammer 36, in welcher das Aufbereitungsmaterial 44 angeordnet ist. Das in der Aufnahmekammer 36 des Kartuschenkörpers 12 angeordnete Aufbereitungsmaterial 44 ist ein Ionentauscher-Harz, welches beispielsweise in Granulatform vorliegen kann.

Der Kartuschenkörper 12 ist mehrteilig ausgebildet und umfasst einen Basiskörper 14 und einen Kartuschendeckel 16. Das über das Fluidventil 112 einströmende Fluid gelangt über die Perforierung 22 in den Kartuschenkörper 12. Durch eine weitere Perforierung an der unteren Stirnseite der Aufbereitungskartusche 10 kann das aufbereitete Fluid dann den Kartuschenkörper 12 wieder verlassen und über das Fluidventil 114 aus der Fluidaufbereitungsvorrichtung 100 herausströmen. An dem Kartuschendeckel 16 ist eine umlaufende Dichtung 20 angeordnet, welche in Kontakt mit dem Kartuschendeckel 106 bringbar ist.

Der Gehäusedeckel 106 ist über eine Drehverriegelung an dem Gehäusegrundkörper 104 befestigbar. Die Drehverriegelung ist vorliegend ein Bajonett-Verschluss, wobei an dem Gehäusegrundkörper 104 Bajonett-Schlitze 122 ausgebildet sind. An dem Gehäusedeckel 106 sind zu den Bajonett-Schlitzen 122 korrespondierende Bajonett-Stifte 124 angeordnet, sodass eine Verriegelung des Gehäusedeckels 106 und des Gehäusegrundkörpers 104 durch eine Drehbewegung des Gehäusedeckels 106 umsetzbar ist. Die erforderliche Drehbewegung zum Ver- und Entriegeln der Kartuschenaufnahmestruktur 102 beträgt weniger als 45 Grad.

An dem Gehäusedeckel 106 befindet sich eine Eingriffskontur 120, die im eingesetzten Zustand des Gehäusedeckels 106 in eine Mitnahmekontur 18 des Kartuschenkörpers 12 eingreift. Die Mitnahmekontur 18 ist vorliegend am Kartuschendeckel 16 des Kartuschenkörpers 12 ausgebildet. Durch den Eingriff der Eingriffskontur 120 des Gehäusedeckels 106 in die Mitnahmekontur 18 des Kartuschendeckels 16 wird der Kartuschenkörper 12 der Aufbereitungskartusche 10 gemeinsam mit dem Gehäusedeckel 106 gedreht, wenn die als Bajonett-Verschluss ausgebildete Drehverriegelung zum Öffnen oder Schließen der Kartuschenaufnahmestruktur 102 der Fluidaufbereitungsvorrichtung 100 betätigt wird.

Die Fluidaufbereitungsvorrichtung 100 erlaubt die Anordnung der Fluidventile 112, 114 an unterschiedlichen Positionen. Nicht genutzte Einlassöffnungen können mit einem Verschlusselement 118, beispielsweise mit einem Verschlussstopfen, verschlossen werden.

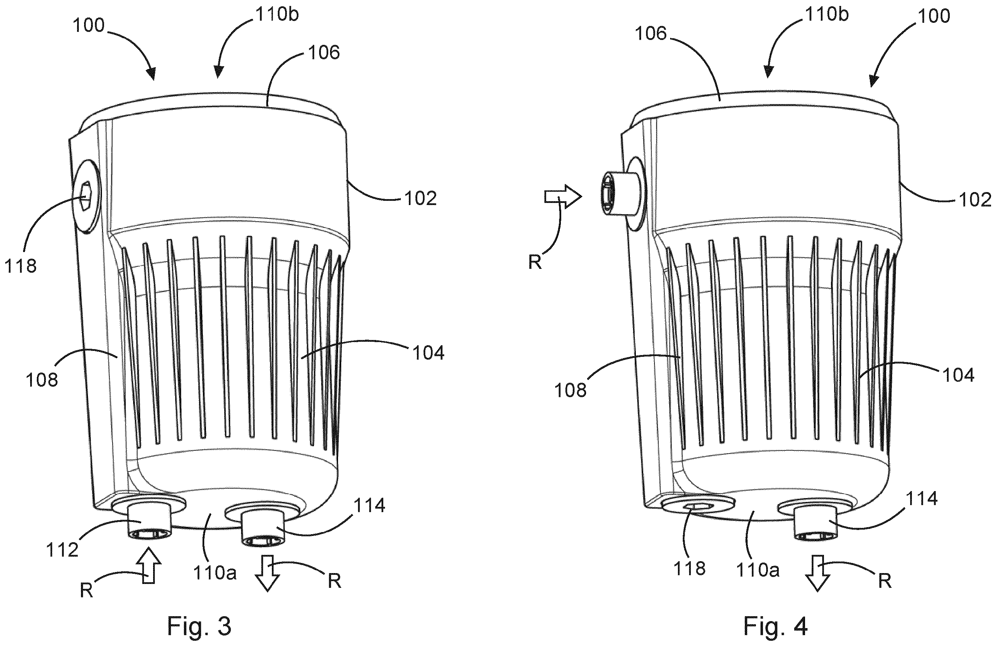

Die Fig. 3 zeigt, dass mittels des Verschlussstopfens 118 auch eine Öffnung in der umlaufenden Bewandung 108 des Gehäusegrundkörpers 104 verschlossen werden kann. Wie durch die angedeuteten Strömungsrichtungen R dargestellt, kann sowohl der Fluideinlass als auch der Fluidauslass an der bodenseitigen Bewandung 110a des Gehäusegrundkörpers 104 erfolgen.

Wie die Fig. 4 zeigt, kann das aufzubereitende Fluid auch seitlich durch eine Öffnung in der umlaufenden Bewandung 108 in die Kartuschenaufnahmestruktur 102 der Fluidaufbereitungsvorrichtung 100 einströmen. Nach Durchströmen des Aufbereitungsmaterials 44 kann das aufbereitete Fluid die Fluidaufbereitungsvorrichtung 100 dann über das Fluidventil 114 in der bodenseitigen Bewandung 110a wieder verlassen.

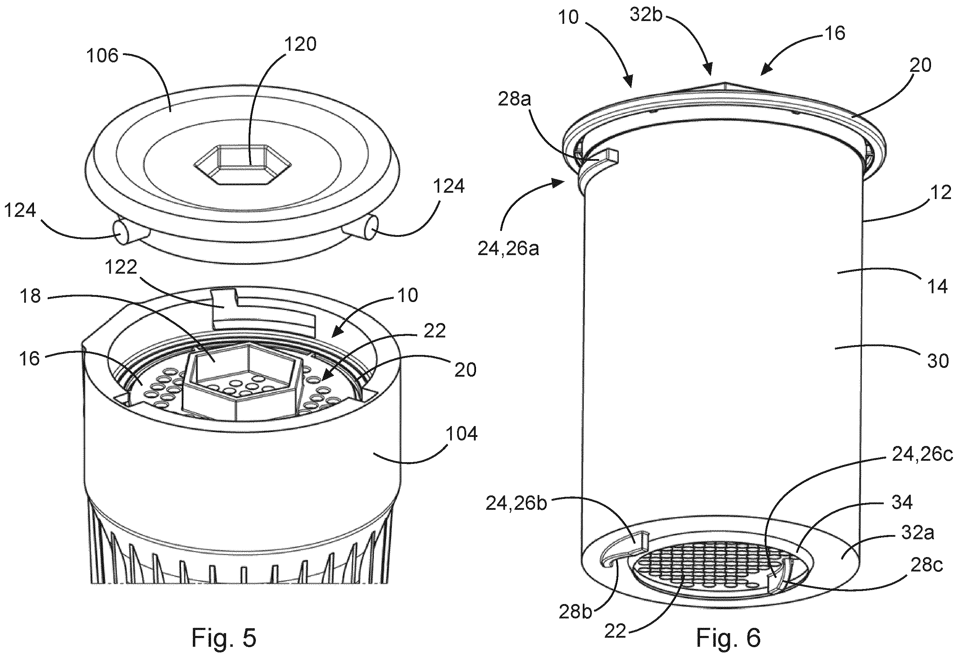

Die Fig. 5 zeigt, dass die Eingriffskontur 120 mehreckig, vorliegend sechseckig, ausgebildet ist. Die Mitnahmekontur 18 am Kartuschendeckel 16 ist ein mehreckiger, nämlich sechseckiger, Stegverlauf, in welchen die Eingriffskontur 120 einsetzbar ist. Nach dem Einsetzen der Bajonett-Stifte 124 in die Bajonett-Schlitze 122 steht die Eingriffskontur 120 in Eingriff mit der Mitnahmekontur 18, sodass der Kartuschenkörper 12 der Aufbereitungskartusche 10 bei einer bei der Verriegelung ausgeführten Drehbewegung des Gehäusedeckels 106 ebenfalls verdreht wird.

Die Fig. 6 zeigt die Aufbereitungskartusche 10 im Detail. Die Aufbereitungskartusche 10 weist eine Ventilbetätigungseinrichtung 24 zur Kontaktbetätigung der Fluidventile 112, 114 der Fluidaufbereitungsvorrichtung 100 auf. Die Ventilbetätigungseinrichtung 24 umfasst mehrere, vorliegend drei, Betätigungselemente 26a-26c, welche sich von dem Kartuschenkörper 12 nach außen erstrecken. An den Betätigungselementen 26a-26c befinden sich Ventilbetätigungsflächen 28a-28c. Die Ventilbetätigungsflächen 28a-28c sind jeweils dazu eingerichtet, sich bei einer Drehbewegung des Kartuschenkörpers innerhalb des Kartuschenaufnahmebereichs 116 der Kartuschenaufnahmestruktur 102 der Fluidaufbereitungsvorrichtung 100 entlang eines Betätigungspfads zu bewegen und durch die Bewegung entlang des Betätigungspfads ein Fluidventil 112, 114 der Fluidaufbereitungsvorrichtung 100 zu betätigen.

Die Ventilbetätigungsflächen 28a-28c sind an den Außenseiten der Betätigungselemente 26a-26c angeordnet und dienen zur Druckbetätigung eines Fluidventils 112, 114. Der Kartuschenkörper 12 umfasst eine umlaufende Außenbewandung 30 und stirnseitige Außenbewandungen 32a, 32b. Das die Ventilbetätigungsfläche 28a tragende Betätigungselement 26a der Ventilbetätigungseinrichtung 24 erstreckt sich von der umlaufenden Außenbewandung 30 des Kartuschenkörpers 12 nach außen. Das die Ventilbetätigungsfläche 28b tragende Betätigungselement 26b der Ventilbetätigungseinrichtung 24 erstreckt sich von der stirnseitigen Außenbewandung 32a nach außen. Das die Ventilbetätigungsfläche 28c tragende Betätigungselement 26c der Ventilbetätigungseinrichtung 24 erstreckt sich ebenfalls von der stirnseitigen Außenbewandung 32a nach außen. Die stirnseitige Außenbewandung 32a, an welcher die Betätigungselemente 26b, 26c angeordnet sind, ist der Boden des Basiskörpers 14. Die Betätigungselemente 26a-26c sind jeweils als Stege ausgebildet und erstrecken sich jeweils entlang eines Kreisbahnteilabschnitts. Die Kreisbahnteilabschnitte, entlang welchen sich die Betätigungselemente 26a-26c erstrecken, weisen unterschiedliche Durchmesser auf. Das Betätigungselement 26a erstreckt sich in Radialrichtung nach außen. Die Betätigungselemente 26b, 26c erstrecken sich in Axialrichtung nach außen, vorliegend nach unten.

Die Perforierung 22 an der Unterseite des Kartuschenkörpers 12 der Aufbereitungskartusche 10 wird von einem Führungs- und Dichtungsring einer Drehführung 34 umgeben. In anderen Ausführungsformen kann die Drehführung des Kartuschenkörpers 12 und die Abdichtung des Bereichs, welcher von dem noch aufzubereitenden Fluid durchströmt wird, gegenüber dem Bereich, welcher von dem bereits aufbereiteten Fluid durchströmt wird, durch zwei separate Teile, nämlich einem Drehführungskörper und einer von dem Drehführungskörper separaten Dichtung, umgesetzt werden. Über die Drehführung 34 wird der Kartuschenkörper 12 während der Drehbewegung innerhalb des Kartuschenaufnahmebereichs 116 der Kartuschenaufnahmestruktur 102 der Fluidaufbereitungsvorrichtung 100 geführt. Ferner sorgt die Ringstruktur für eine Abdichtung zwischen dem Bereich, welcher von dem noch aufzubereitenden Fluid durchströmt wird, und dem Bereich, welcher von dem bereits aufbereiteten Fluid durchströmt wird. Das Betätigungselement 26b befindet sich in dem Bereich, welcher von dem noch aufzubereitenden Fluid durchströmt wird. Das Betätigungselement 26c befindet sich in dem Bereich, welcher von dem aufbereiteten Fluid durchströmt wird. Wenn Fluidaufbereitungsvorrichtung 100 andersherum von dem Fluid durchströmt wird, befindet sich das Betätigungselement 26b in dem Bereich, welcher von dem bereits aufbereiteten Fluid durchströmt wird. Das Betätigungselement 26c befindet sich in diesem Fall in dem Bereich, welcher von dem noch aufzubereitenden Fluid durchströmt wird.

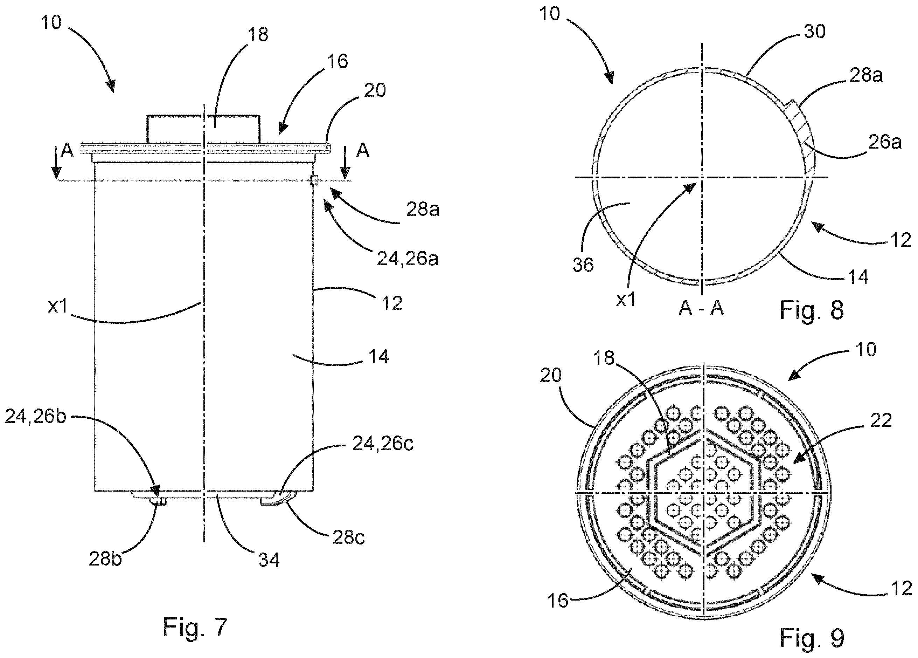

Wie in den Fig. 7 und 8 dargestellt, erstrecken sich die Kreisbahnteilabschnitte, entlang welchen sich die jeweiligen Betätigungselemente 26a-26c erstrecken, über einen Winkelbereich von weniger als 45 Grad. Die als nach außen ragenden Stege ausgebildeten Betätigungselemente 26a-26c weisen dabei eine sich in Verlaufsrichtung des jeweiligen Betätigungselements 26a-26c verändernde Steghöhe auf. Das Betätigungselement 26a erstreckt sich in Umfangsrichtung. Die Betätigungselemente 26b, 26c erstrecken sich in Axialrichtung. Die Höhe der Stege der Betätigungselemente 26a-26c nimmt innerhalb eines Bereichs des Kreisbahnteilabschnitts rampenartig zu. Vorliegend sind die Betätigungselemente 26a-26c integrale Bestandteile des Basiskörpers 14. In den Bereichen der Betätigungselemente 26a, 26c ist also auch die Wandstärke des Basiskörpers 14 erhöht.

Die Fig. 9 zeigt eine Draufsicht auf den Kartuschendeckel 16 der Aufbereitungskartusche 10. Die Perforierung 22, welche ein Einströmen in die Aufnahmekammer 36 des Kartuschenkörpers 12 erlaubt, ist innenseitig und außenseitig der Mitnahmekontur 18 angeordnet.

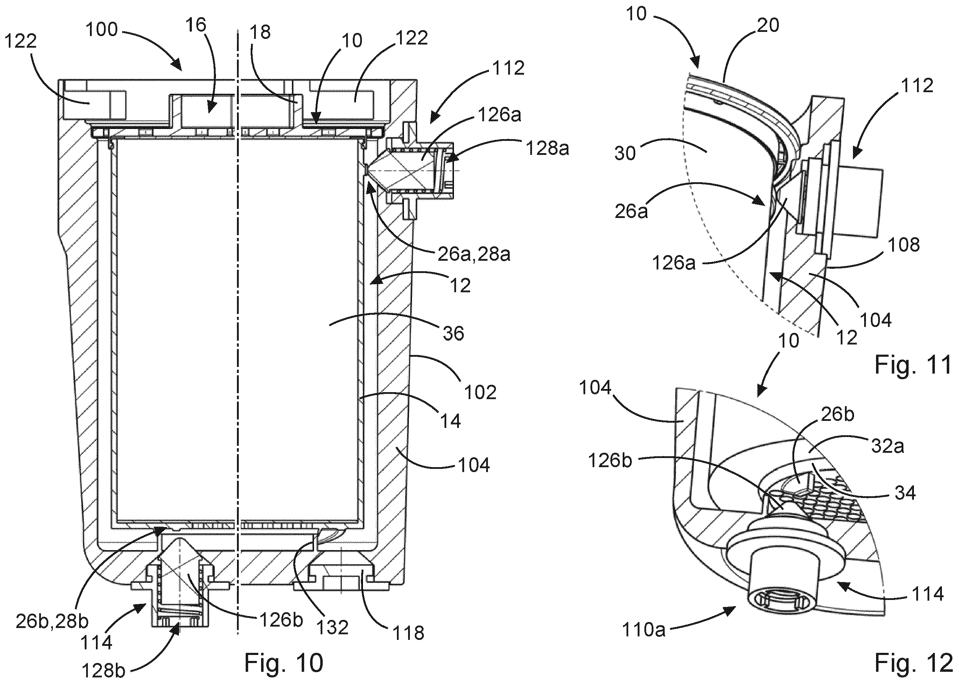

Die Fig. 10 bis 12 zeigen eine Fluidaufbereitungsvorrichtung 100 nach dem Einsetzen einer Aufbereitungskartusche 10 und vor dem Verdrehen des eingesetzten Aufbereitungskartusche 10. Die Fluidventile 112, 114 befinden sich in einem geschlossenen Zustand, sodass das Einströmen des Fluids in die Kartuschenaufnahmestruktur 102 hinein und das Herausströmen des Fluids aus der Kartuschenaufnahmestruktur 102 heraus unterbunden wird. In dem geschlossenen Zustand der Fluidventile 112, 114 werden bewegliche Ventilkörper 126a, 126b von Ventilfedern 128a, 128b in einen Ventilsitz gedrückt, sodass die Durchlassöffnungen der Fluidventile 112, 114 durch die Ventilkörper 126a, 126b gesperrt sind.

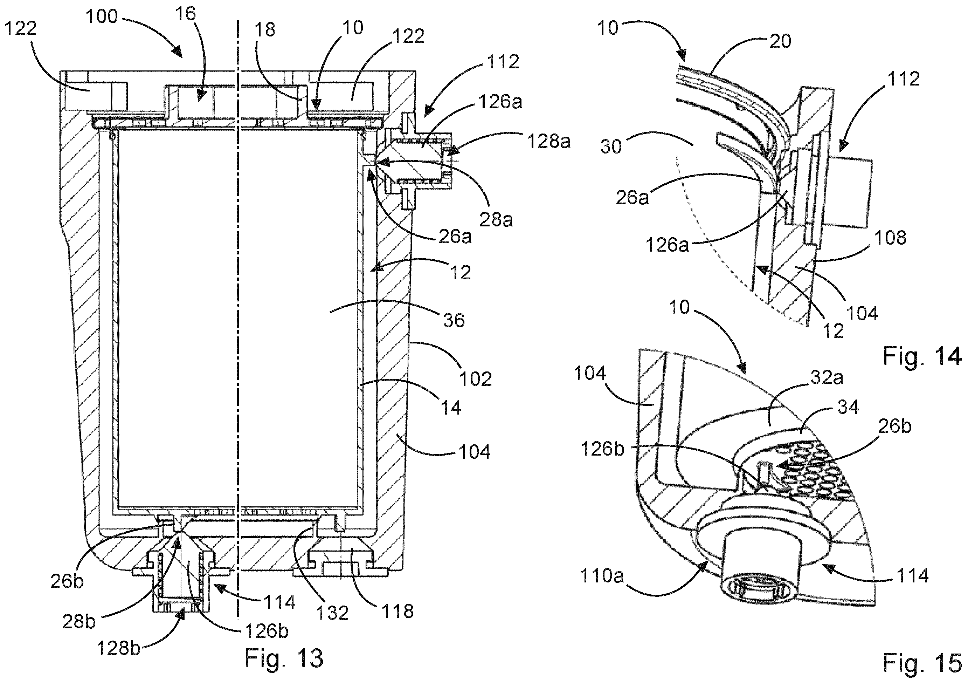

Durch eine Drehbewegung des Kartuschenkörpers 12, beispielsweise über den Gehäusedeckel 116 (nicht dargestellt) werden die Fluidventile 112, 114 durch die Ventilbetätigungsflächen 28a, 28b der Ventilbetätigungseinrichtung 24 geöffnet. Dieser Zustand ist in den Fig. 13 bis 15 dargestellt.

Aufgrund der rampenartigen Stegform der die Ventilbetätigungsflächen 28a, 28b tragenden Betätigungselemente 26a, 26b werden die Ventilkörper 126a, 126b der Fluidventile 112, 114 entgegen der Federkraft bei einer Drehbewegung des Kartuschenkörpers 12 nach außen gedrückt. Der Ventilkörper 126a des Fluidventils 112 wird durch die Ventilbetätigungsfläche 26a in Radialrichtung nach außen gedrückt. Der Ventilkörper 126b des Fluidventils 114 wird von der Ventilbetätigungsfläche 26b axial nach außen gedrückt.

Somit kommt es beim Verriegeln der Kartuschenaufnahmestruktur 102 der Fluidaufbereitungsvorrichtung 100 durch eine Drehbewegung des Gehäusedeckels 106 zwangsläufig zu einer Ventilbetätigung, durch welche die Fluidventile 112, 114 von einem geschlossenen Zustand in einen geöffneten Zustand überführt werden. Somit wird erreicht, dass bei einem Wechsel der Aufbereitungskartusche beim Öffnen der Kartuschenaufnahmestruktur 102 der Fluidaufbereitungsvorrichtung 100 automatisch die Fluidventile 112, 114 geschlossen werden, wobei die Fluidventile 112, 114 nach dem Einsetzen einer neuen Aufbereitungskartusche 10 und dem Verriegeln des Gehäusedeckels 106 wieder automatisch geöffnet werden.

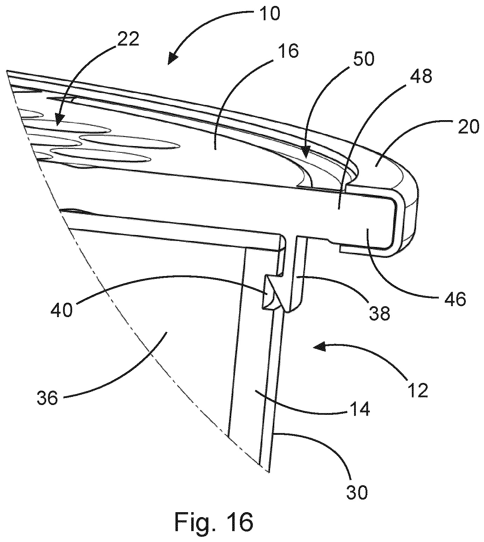

Die Fig. 16 zeigt, dass der Kartuschendeckel 16 zerstörungsfrei und reversibel lösbar mit dem Basiskörper 14 des Kartuschenkörpers 12 verbunden ist. Hierzu sind an dem Kartuschendeckel 16 Schnapphaken 38 vorgesehen, welche in Nuten 40 des Basiskörpers 14 eingreifen. Durch die Schnapphakenverbindung kann die Aufnahmekammer 36 innerhalb des Kartuschenkörpers 12 geöffnet werden, beispielsweise um das sich in der Aufnahmekammer 36 befindende Aufbereitungsmaterial 44 zu ersetzen.

An dem Kartuschendeckel 16 befindet sich ferner eine umlaufende Dichtung 20, welche nach Einsetzen der Aufbereitungskartusche 10 in den Kartuschenaufnahmebereich 116 der Kartuschenaufnahmestruktur 102 der Fluidaufbereitungsvorrichtung 100 mit einer Innenfläche der umlaufenden Bewandung 108 in Kontakt steht. Nach dem Verriegeln des Gehäusedeckels steht auch eine innenliegende Deckelfläche des Gehäusedeckels 106 mit der Dichtung 20 in Kontakt.

Die umlaufende Dichtung 20 wird von einem umlaufenden Dichtungsträger 46 getragen, wobei der Dichtungsträger 46 ringförmig ausgebildet und über Speichen 48 mit dem perforierten Deckelabschnitt verbunden ist. Zwischen dem ringförmigen Dichtungsträger 46 und dem perforierten Deckelabschnitt befindet sich ein durch die Speichen 48 segmentweise unterbrochener umlaufender Spalt 50, über welchen das Fluid die Perforierungen 22 im Kartuschendeckel 16 erreichen kann. Wenn die Perforierungen 22 bei alternativen Ausführungsformen seitlich, also an der umlaufenden Außenbewandung 30, angeordnet sind, kann auf den Spalt 50 verzichtet werden und eine dichte bzw. durchgängige Scheibe als Kartuschendeckel 16 verwendet werden.

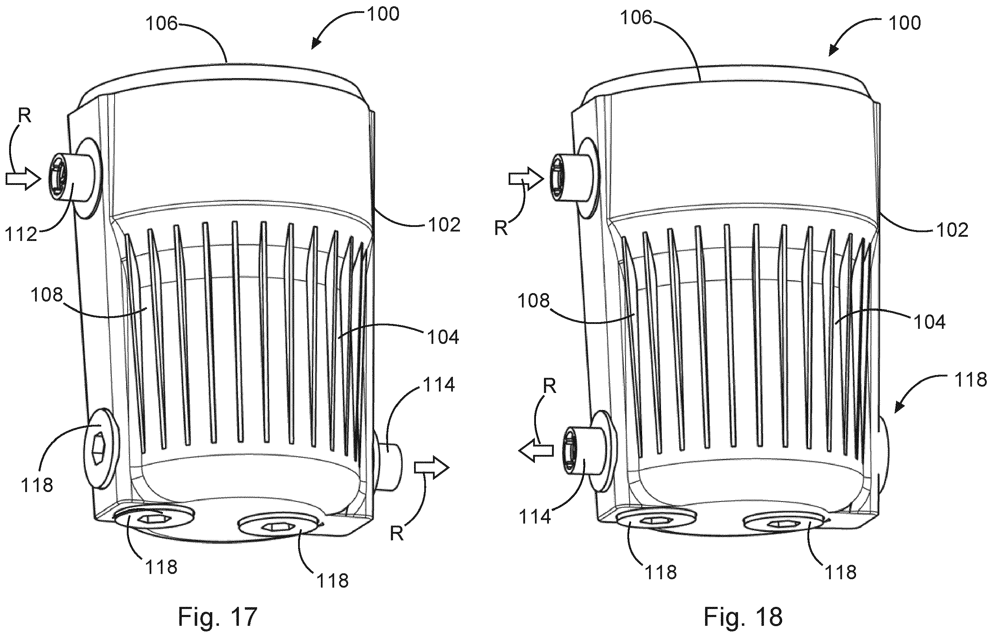

Wie die Fig. 17 und 18 zeigen, kann die Kartuschenaufnahmestruktur 102 der Fluidaufbereitungsvorrichtung 100 auch weitere Ein- oder Auslassöffnungen in der umlaufenden Bewandung 108 des Gehäusegrundkörpers 104 aufweisen. Das Einlassventil 112 und das Auslassventil 114 können dabei auf unterschiedlichen Höhen entweder auf gegenüberliegenden Seiten (vgl. Fig. 17) oder auf der gleichen Seite (vgl. Fig. 18) angeordnet sein. Bei diesen Ausführungsformen kann sich der außerhalb der Aufbereitungskartusche liegende Bereich, der von dem noch aufzubereitenden Fluid durchströmt wird, oberhalb oder unterhalb des außerhalb der Aufbereitungskartusche liegenden Bereichs, der von dem bereits aufbereiteten Fluid durchströmt wird, befinden. Diese Bereiche müssen über eine Dichtung voneinander getrennt werden. Diese Dichtung kann sich beispielsweise entlang des Außenumfangs der Aufbereitungskartusche erstrecken.

Die übrigen nicht genutzten Öffnungen in der Kartuschenaufnahmestruktur 102 der Fluidaufbereitungsvorrichtung 100 sind mit Verschlusselementen 118, beispielsweise Verschlussstopfen, verschlossen.

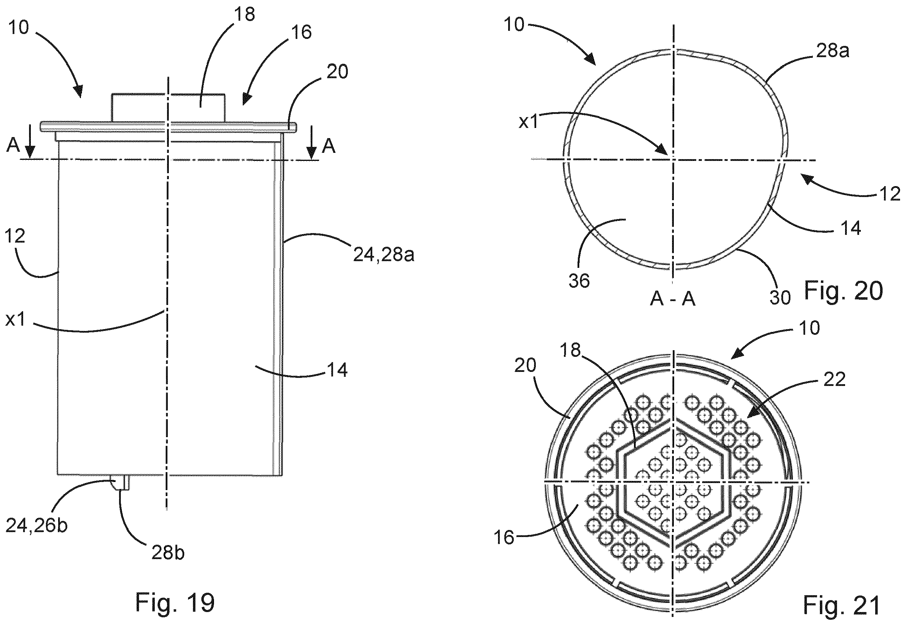

Die Fig. 19 bis 21 zeigen eine alternative Ausführungsform der Aufbereitungskartusche 10. Bei dieser Aufbereitungskartusche 10 weist der Basiskörper 14 des Kartuschenkörpers 12 eine seitliche Ausbuchtung auf, welche die Ventilbetätigungsfläche 28a der Ventilbetätigungseinrichtung 24 trägt. An der umlaufenden Außenbewandung 30 des Kartuschenkörpers 12 kann somit auf ein als Steg ausgebildetes Betätigungselement verzichtet werden. Die Ventilbetätigungsfläche 28a ist dazu eingerichtet, sich bei einer Drehbewegung des Kartuschenkörpers 12 innerhalb des Kartuschenaufnahmebereichs 116 der Kartuschenaufnahmestruktur 102 der Fluidaufbereitungsvorrichtung 100 entlang eines Betätigungspfads zu bewegen und durch die Bewegung entlang des Betätigungspfads ein Fluidventil 112 der Fluidaufbereitungsvorrichtung 100 zu betätigen.

Wie die Fig. 21 zeigt, überragt die Dichtung 20 die die Ventilbetätigungsfläche 28a tragende Ausbuchtung am Kartuschenkörper 12, sodass weiterhin eine ordentliche Abdichtung gewährleistet wird.

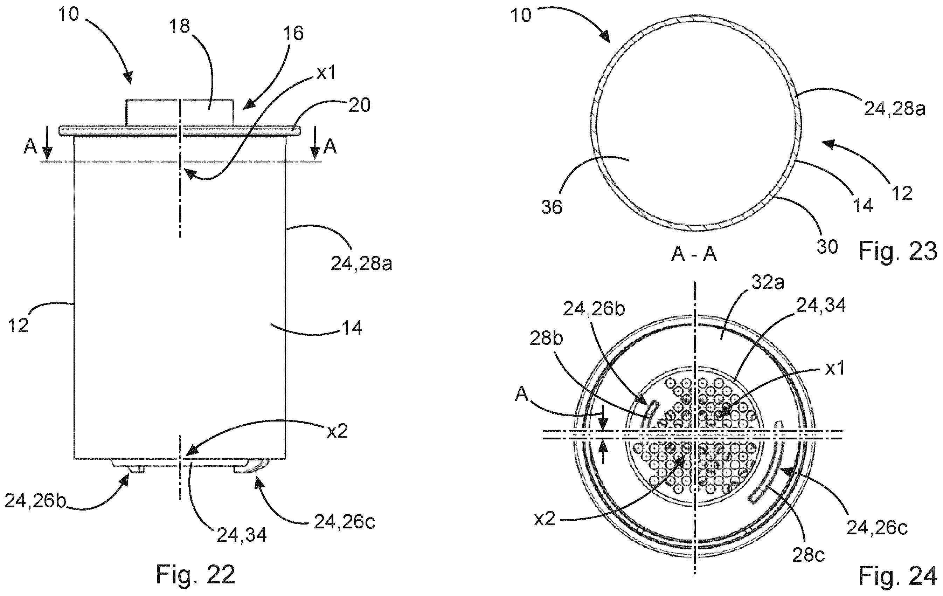

Bei den bisher beschriebenen Ausführungsformen verläuft die Mittelachse x1 des Kartuschenkörpers 12 und der Kartuschenaufnahmestruktur 102 der Fluidaufbereitungsvorrichtung 100 koaxial zu der Drehachse des Kartuschenkörpers 12. Die Fig. 22 bis 24 zeigen eine Aufbereitungskartusche 10, bei welchem die Mittelachse x1 des Kartuschenkörpers 12 und der Kartuschenaufnahmestruktur 102 der Fluidaufbereitungsvorrichtung 100 und die die Drehachse vorgebende Mittelachse x2 des Führungsrings der Drehführung 34 einen Abstand A voneinander aufweisen. Die Gegenkontur 132 der Drehführung 34 kann mittig am Boden der Kartuschenaufnahmestruktur 102 der Fluidaufbereitungsvorrichtung 100 angeordnet sein (vgl. Fig. 10 und 13).

Durch die Beabstandung der Mittelachse x1 des Kartuschenkörpers 12 und der die Drehachse vorgebenden Mittelachse x2 des Führungsrings des Drehführung 34 kommt es während der Drehbewegung des Kartuschenkörpers 12 innerhalb des Kartuschenaufnahmebereichs 116 der Kartuschenaufnahmestruktur 102 der Fluidaufbereitungsvorrichtung 100 zu einer Exzenterbewegung des Kartuschenkörpers 12. Durch die Exzenterbewegung des Kartuschenkörpers 12 kann eine Ventilbetätigung eines im Umfangsbereich der Aufbereitungskartusche 10 angeordneten Fluidventils 112 auch erfolgen, wenn der Kartuschenkörper 12 weder ein stegförmiges Betätigungselement noch eine seitliche Ausbuchtung aufweist. Die Ventilbetätigungsfläche 28a ist in diesem Fall ein Abschnitt der zylindrischen Umfangsfläche des Basiskörpers 14. Aufgrund der Exzenterbewegung des Kartuschenkörpers 12 wird die Ventilbetätigungsfläche 28a bei einer Drehbewegung des Kartuschenkörpers 12 auf eine im Umfangsbereich angeordneten Fluidventil 112 zubewegt oder von dem im Umfangsbereich angeordneten Fluidventil 112 wegbewegt.

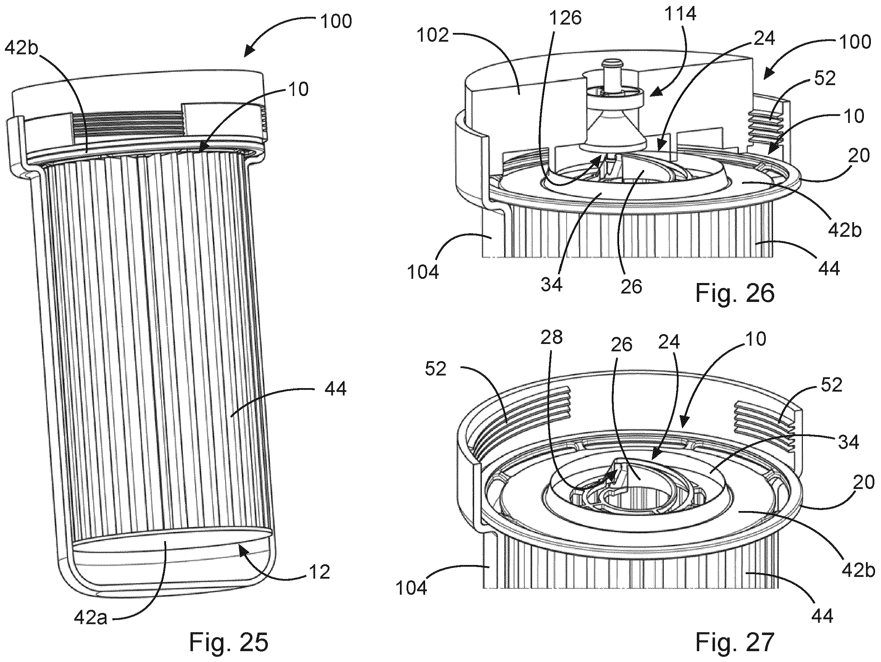

Die Fig. 25 bis 27 zeigen eine Fluidaufbereitungsvorrichtung 100, welche als Flüssigkeitsfilter ausgebildet ist. Demnach ist die Aufbereitungskartusche 10 ein Filtereinsatz. Die Fluidaufbereitungsvorrichtung 100 kann beispielsweise zum Filtern von Öl oder Kraftstoff eingesetzt werden. Der Kartuschenkörper 12 weist in diesem Fall zwei Endscheiben 42a, 42b auf, zwischen welchen das Aufbereitungsmaterial 44 angeordnet ist. Das Aufbereitungsmaterial 44 ist ein von dem zu filternden Fluid durchströmbarer Filterstoff, wobei der Filterstoff einen umlaufenden Faltenbalg bildet.

Die Ventilbetätigungseinrichtung 24 umfasst in diesem Fall ein Betätigungselement 26, welches eine Wendel- oder Spiralform aufweist. Die Ventilbetätigungsfläche 28 ist in diesem Fall eine nach innen gerichtete Fläche, welche zur Zugbetätigung des Fluidventils 114 dient. Wenn der Kartuschenkörper 12 relativ zu der Kartuschenaufnahmestruktur 102 der Fluidaufbereitungsvorrichtung 100 verdreht wird, wird der Ventilkörper 126 des Fluidventils 114 in Axialrichtung, vorliegend nach unten, bewegt, wodurch sich der Ventilkörper 126 von seinem Ventilsitz löst und das Fluidventil 114 somit geöffnet wird. Bei einer entgegengesetzten Drehbewegung des Kartuschenkörpers 12 kann eine Rückstellfeder des Fluidventils 114 eine Schließbewegung des Ventilkörpers 126 veranlassen.

Grundsätzlich kann das wendel- oder spiralförmige Betätigungselement 26 auch weiter innenliegend angeordnet sein und beispielsweise von dem Aufbereitungsmaterial umgeben bzw. umschlossen werden. Das Betätigungselement 26 kann im Innenbereich des umlaufenden Faltenbalgs angeordnet sein.

Der Kartuschenkörper 12 ist über in Umfangrichtung beabstandete Gewindesegmente 52 in eine Kartuschenaufnahmestruktur 102 eindrehbar. Über die Segmentierung des Gewindes kommen bei einer Drehbewegung des Kartuschenkörpers 12 direkt mehrere Gewindegänge miteinander in Eingriff kommen. Somit kann mit einer vergleichsweise kleinen Drehbewegung am Kartuschenkörper 12 eine Drehverriegelung des Kartuschenkörpers 12 in der Kartuschenaufnahmestruktur 102 umgesetzt werden.

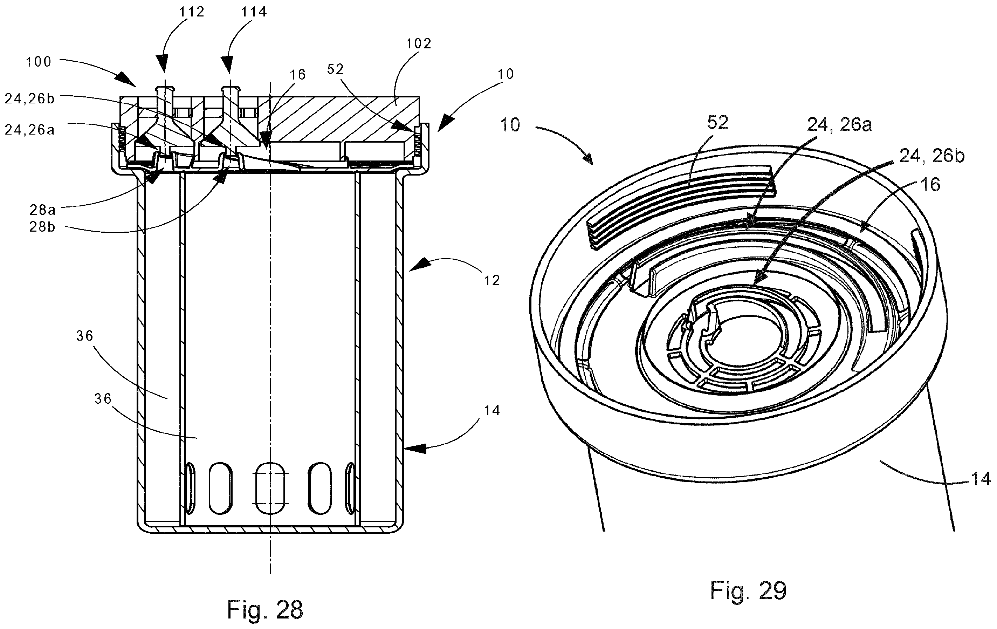

Die Fig. 28 zeigt eine Fluidaufbereitungsvorrichtung 100 mit einer als Ionentauscher-Kartusche ausgebildeten Aufbereitungskartusche 10. Der Kartuschenkörper 12 ist über Gewindesegmente 52 an einer Kartuschenaufnahmestruktur 102 befestigt. Der Kartuschenkörper 12 umfasst einen Basiskörper 14 und einen Kartuschendeckel 16 und umschließt eine Aufnahmekammer 36, in welcher von dem zu filternden Fluid durchströmbares Aufbereitungsmaterial, beispielsweise ein Ionentauscher-Harz, angeordnet sein kann.

Die Ventilbetätigungseinrichtung 24 der Aufbereitungskartusche 10 umfasst in diesem Fall zwei Betätigungselemente 26a, 26b, welche an dem Kartuschendeckel 16 angeordnet sind und sich jeweils entlang eines Kreisbahnteilabschnitts erstrecken (vgl. Fig. 29). Die Betätigungselemente 26a, 26b sind beabstandet voneinander angeordnet und tragen jeweils eine innenliegende Ventilbetätigungsfläche 28a, 28b, welche aufgrund der Rampenform der Betätigungselemente 26a, 26b eine Steigung aufweisen. Die Ventilbetätigungsflächen 28a, 28b dienen zur Zugbetätigung der Fluidventile 112, 114, welche in der Kartuschenaufnahmestruktur 102 angeordnet sind.

Wenn der Kartuschenkörper 12 verdreht wird, werden die Ventilkörper der Fluidventil 112, 114 in Axialrichtung, vorliegend nach unten, bewegt, wodurch sich die Ventilkörper vom Ventilsitz lösen und die Fluidventile 112, 114 öffnen. Bei einer entgegengesetzten Drehbewegung des Kartuschenkörpers 12 können Rückstellfedern der Fluidventile 112, 114 eine Schließbewegung der Ventilkörper veranlassen.

Die Ventilbetätigungsflächen 28a, 28b sind also jeweils dazu eingerichtet, sich bei einer Drehbewegung des Kartuschenkörpers 12 entlang eines Betätigungspfads zu bewegen und durch die Bewegung entlang des Betätigungspfads die Fluidventile 112, 114 der Fluidaufbereitungsvorrichtung 100 zu betätigen.

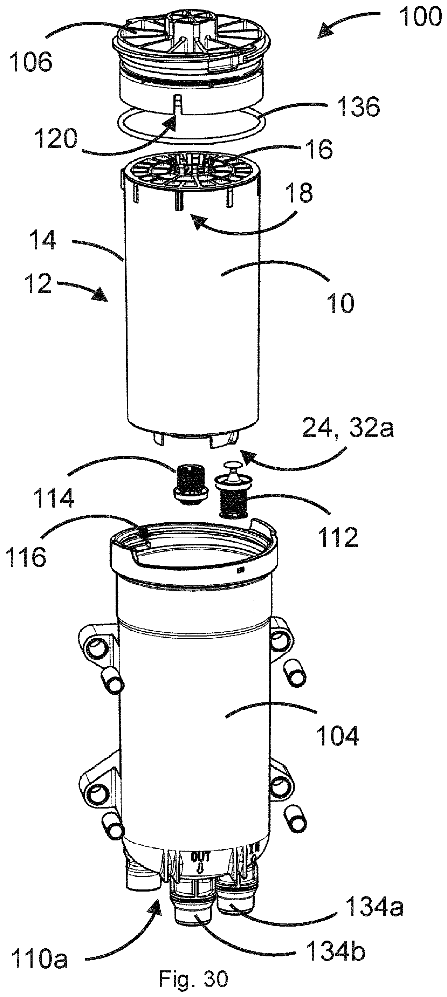

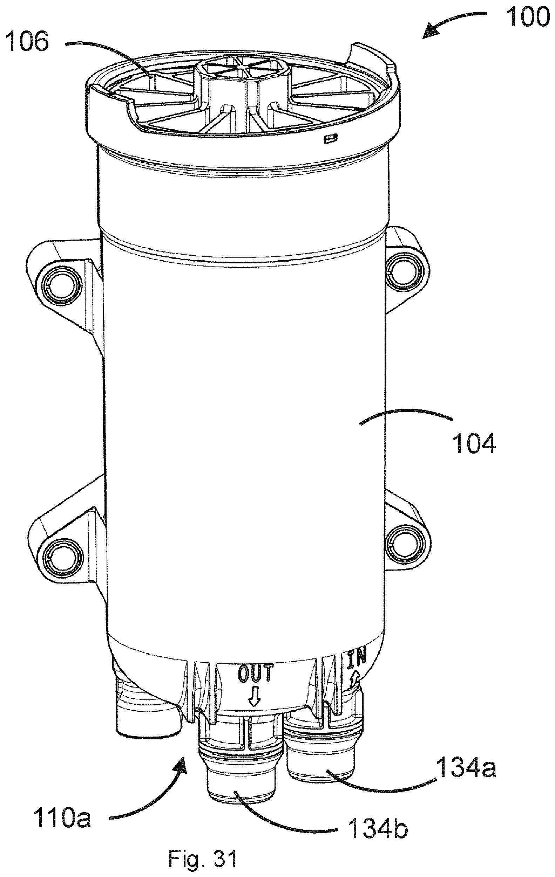

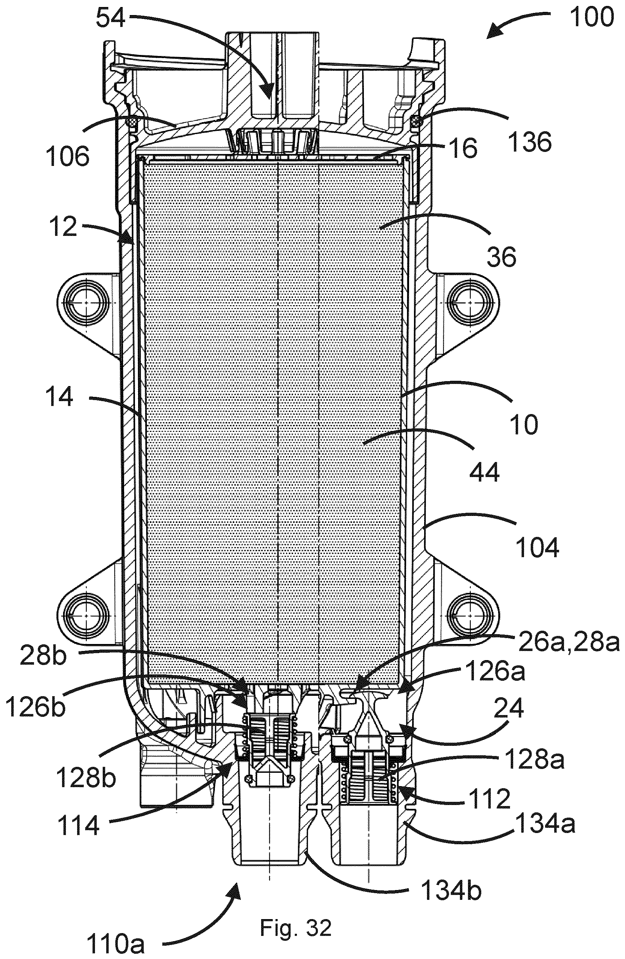

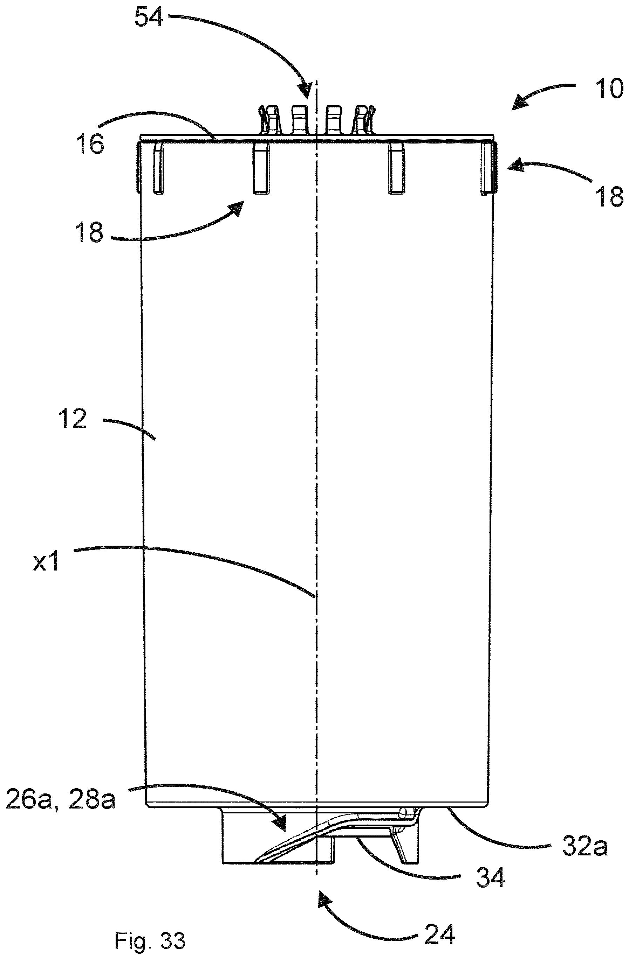

Die Fig. 30 bis 37 zeigen eine weitere Fluidaufbereitungsvorrichtung 100 zum Aufbereiten eines Fluids. Die Fluidaufbereitungsvorrichtung 100 umfasst eine mehrteilige Kartuschenaufnahmestruktur mit einem becherförmigen Gehäusegrundkörper 104 und einem Gehäusedeckel 106. Der becherförmige Gehäusegrundkörper 104 umfasst eine den Gehäuseboden bildende stirnseitige Bewandung 110a.

Die Fluidaufbereitungsvorrichtung 100 umfasst ferner zwei Fluidventile 112, 114. Das Fluidventil 112 ist ein Einlassventil, über welches das aufzubereitende Fluid im geöffneten Zustand des Fluidventils 112 in den Gehäusegrundkörper 104 einströmen kann. Das Fluidventil 114 ist ein Auslassventil, über welches das aufbereitete Fluid im geöffneten Zustand des Fluidventils 114 aus dem Gehäusegrundkörper 104 herausströmen kann. Die Strömungsrichtung kann jedoch auch umgekehrt sein, sodass das Fluidventil 114 ein Einlassventil und das Fluidventil 112 ein Auslassventil ist.

Zur Aufnahme der Fluidventile 112, 114 weist der Gehäusegrundkörper 104 stirnseitige Ventilaufnahmen auf, welche sich in Anschlussstutzen 134a, 134b befinden. Die Anschlussstutzen 134a, 134b bilden auch den Fluideinlass und den Fluidauslass der Fluidaufbereitungsvorrichtung 100. Der Gehäusegrundkörper 104 weist einen Kartuschenaufnahmebereich 116 auf, in welchen eine Aufbereitungskartusche 10 einsetzbar ist, wenn der Gehäusedeckel 106 von dem Gehäusegrundkörper 104 gelöst wurde.

Die Aufbereitungskartusche 10 ist eine austauschbare bzw. auswechselbare Kartusche. Die Aufbereitungskartusche 10 weist einen im Wesentlichen zylindrischen Kartuschenkörper 12 zur Aufnahme eines von dem aufzubereitenden Fluid durchströmbaren Aufbereitungsmaterials 44 auf. Der Kartuschenkörper 12 umschließt eine Aufnahmekammer 36, in welcher das Aufbereitungsmaterial 44 angeordnet ist. Das in der Aufnahmekammer 36 des Kartuschenkörpers 12 angeordnete Aufbereitungsmaterial 44 ist ein Granulat.

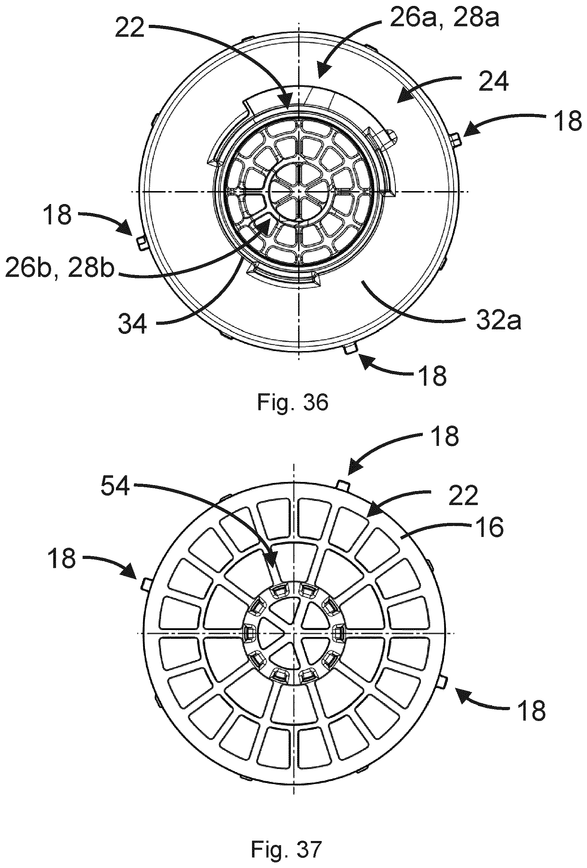

Der Kartuschenkörper 12 ist mehrteilig ausgebildet und umfasst einen Basiskörper 14 und einen Kartuschendeckel 16. Das über das Fluidventil 112 in die Aufnahmekammer 36 einströmende Fluid gelangt über die Perforierung 22 im Kartuschendeckel 16 (vgl. Fig. 37) in den Kartuschenkörper 12. Durch eine weitere Perforierung 22 an der unteren Stirnseite 32a der Aufbereitungskartusche 10 (vgl. Fig. 36) kann das aufbereitete Fluid dann den Kartuschenkörper 12 wieder verlassen und über das Fluidventil 114 aus der Fluidaufbereitungsvorrichtung 100 herausströmen.

Zwischen dem Gehäusegrundkörper 104 und dem Gehäusedeckel 106 befindet sich eine umlaufende Dichtung 136. Der Gehäusedeckel 106 ist über eine Drehverriegelung an dem Gehäusegrundkörper 104 befestigbar. An dem Gehäusedeckel 106 befinden sich mehrere schlitzförmige Eingriffskonturen 120, die im eingesetzten Zustand des Gehäusedeckels 106 in stegartige Mitnahmekonturen 18 des Kartuschenkörpers 12 eingreifen. Die Mitnahmekonturen 18 sind am Basiskörper 14 des Kartuschenkörpers 12 ausgebildet. Durch den Eingriff der Eingriffskonturen 120 des Gehäusedeckels 106 in die Mitnahmekonturen 18 des Basiskörpers 14 wird der Kartuschenkörper 12 der Aufbereitungskartusche 10 gemeinsam mit dem Gehäusedeckel 106 gedreht, wenn die Drehverriegelung zum Öffnen oder Schließen der Kartuschenaufnahmestruktur 102 der Fluidaufbereitungsvorrichtung 100 betätigt wird. In der dargestellten Ausführungsform sind drei stegartige Mitnahmekonturen 18 über den Umfang des Kartuschenkörpers 12 verteilt. Zwischen den stegartigen Mitnahmekonturen 18 befinden sich Zentrierrippen des Kartuschenkörpers 12, wobei die Zentrierrippen flacher als die stegartigen Mitnahmekonturen 18 ausgebildet sind.

Der Kartuschendeckel 16 weist Schnapphaken 54 auf, über welche der Kartuschendeckel 16 in den Gehäusedeckel 106 eingeklipst werden kann.

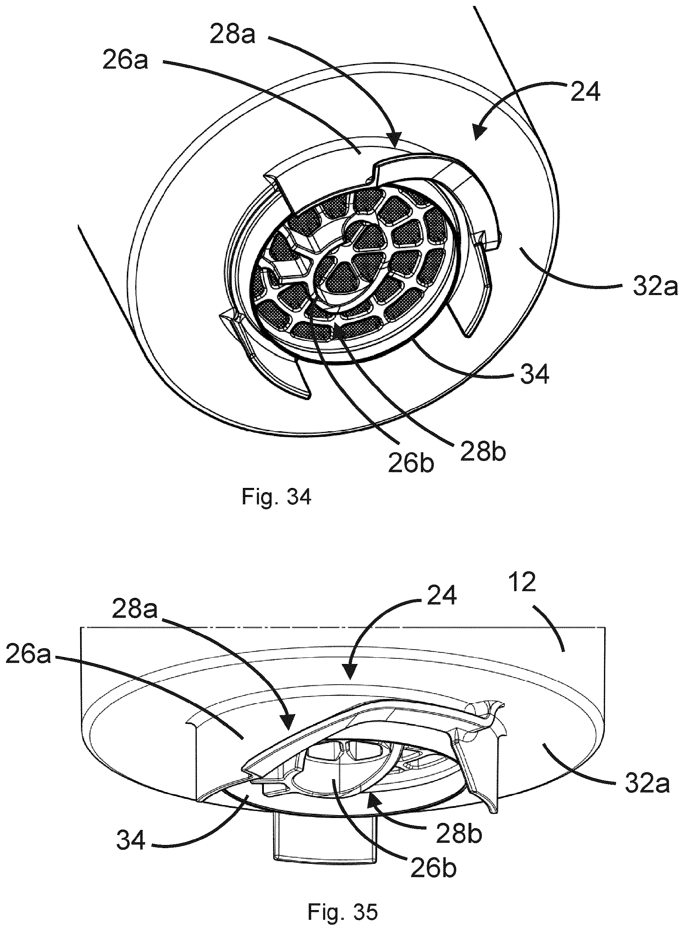

Die Ventilbetätigungseinrichtung 24 befindet sich an der unteren Stirnseite 32a der Aufbereitungskartusche 10 und umfasst zwei Betätigungselemente 28a, 28b. Die beiden Betätigungselemente 28a, 28b sind jeweils als Stege ausgebildet, welche sich jeweils entlang eines Kreisbahnteilabschnitts erstrecken, wobei die Kreisbahnteilabschnitte, entlang welchen sich die Betätigungselemente 28a, 28b erstrecken, koaxial verlaufen und unterschiedliche Durchmesser aufweisen (vgl. Fig. 34 & 35). Der Kreisbahnteilabschnitt, entlang welchem sich das Betätigungselement 28a erstreckt, weist einen größeren Durchmesser auf als der Kreisbahnteilabschnitt, entlang welchem sich das Betätigungselement 28b erstreckt.

Das Betätigungselement 28a und dessen Ventilbetätigungsfläche 26a dienen zur Zugbetätigung des Fluidventils 112. Das Betätigungselements 28b und dessen Ventilbetätigungsfläche 26b dienen zur Druckbetätigung des Fluidventils 114.

Die Ventilbetätigungsfläche 28a des Betätigungselements 26a weist eine eine Steigung aufweisende Zugbetätigungskontur auf, welche mit dem Ventilkörper 126a des Fluidventils 112 zur Zugbetätigung des Fluidventils 112 in Eingriff bringbar ist. Die Ventilbetätigungsfläche 28a des zur Zugbetätigung dienenden Betätigungselements 26a ist an einer dem Kartuschenkörper 12 zugewandten Innenseite des Betätigungselements 26a angeordnet.

Die Ventilbetätigungsfläche 28b des Betätigungselements 26b weist eine eine Steigung aufweisende Druckbetätigungskontur auf, welche mit dem Ventilkörper 126b des Fluidventils 114 zur Druckbetätigung des Fluidventils 112 in Kontakt bringbar ist. Die Ventilbetätigungsfläche 28b des zur Druckbetätigung dienenden Betätigungselements 26b ist an einer dem Kartuschenkörper 12 abgewandten Außenseite des Betätigungselements 26b angeordnet.

Beim Ausführen einer Drehbewegung des Kartuschenkörpers 12 erfolgt eine Axialbetätigung der Fluidventile 112, 114.

Bei einer Drehbewegung des Kartuschenkörpers 12 in eine erste Drehrichtung wird der Ventilkörper 126a von der Ventilbetätigungsfläche 26a des Betätigungselements 28a axial in Richtung des Kartuschenkörpers 12 gezogen und der Ventilkörper 126b wird von der Ventilbetätigungsfläche 26b des Betätigungselements 28b axial von dem Kartuschenkörper 12 weggedrückt.

Bei einer Drehbewegung des Kartuschenkörpers 12 in eine zweite entgegengesetzte Drehrichtung wird der Ventilkörper 126a über die als Druckfeder ausgebildete Ventilfeder 128a wieder axial von dem Kartuschenkörper 12 wegbewegt und der Ventilkörper 126b wird über die als Druckfeder ausgebildete Ventilfeder 128b wieder axial in Richtung des Kartuschenkörpers 12 bewegt. Die Fluidventile 112, 114 sind entgegengesetzt ausgerichtet, sodass die Ventilfedern 128a, 128b die Ventilkörper 126a, 126b in entgegengesetzte Richtungen bewegen. Die Ventilfeder 128a bewegt den Ventilkörper 126a nach unten. Die Ventilfeder 128b bewegt den Ventilkörper 126b nach oben.

### Bezugszeichen

- 10: Aufbereitungskartusche
- 12: Kartuschenkörper
- 14: Basiskörper
- 16: Kartuschendeckel
- 18: Mitnahmekontur
- 20: Dichtung
- 22: Perforierung
- 24: Ventilbetätigungseinrichtung
- 26, 26a-26c: Betätigungselemente
- 28, 28a-28c: Ventilbetätigungsflächen
- 30: umlaufenden Außenbewandung
- 32a, 32b: stirnseitige Außenbewandungen
- 34: Drehführung
- 36: Aufnahmekammer
- 38: Schnapphaken
- 40: Nut
- 42a, 42b: Endscheiben
- 44: Aufbereitungsmaterial
- 46: Dichtungsträger
- 48: Speiche
- 50: Spalt
- 52: Gewindesegmente
- 54: Schnapphaken

- 100: Fluidaufbereitungsvorrichtung
- 102: Kartuschenaufnahmestruktur
- 104: Gehäusegrundkörper
- 106: Gehäusedeckel
- 108: umlaufende Bewandung
- 110a, 110b: stirnseitigen Bewandungen
- 112: Fluidventil
- 114: Fluidventil
- 116: Kartuschenaufnahmebereich
- 118: Verschlusselement
- 120: Eingriffskontur
- 122: Bajonettschlitze
- 124: Bajonettstifte
- 126, 126a, 126b: Ventilkörper
- 128a, 128b: Ventilfedern
- 132: Gegenkontur der Drehführung
- 134a, 134b: Anschlussstutzen
- 136: Dichtung

- A: Abstand
- R: Strömungsrichtungen
- x1, x2: Mittelachsen

## Patentansprüche

1. Aufbereitungskartusche (10) für eine Fluidaufbereitungsvorrichtung (100), mit
- einem Kartuschenkörper (12) zur Aufnahme eines von dem aufzubereitenden Fluid durchströmbaren Aufbereitungsmaterials (44); und
- einer Ventilbetätigungseinrichtung (24) mit mehreren Ventilbetätigungsflächen (28a, 28b) zur Kontaktbetätigung mehrerer Fluidventile (112, 114) der Fluidaufbereitungsvorrichtung (100);
wobei die mehreren Ventilbetätigungsflächen (28a, 28b) jeweils dazu eingerichtet sind, sich bei einer Drehbewegung des Kartuschenkörpers (12) oder eines Teils des Kartuschenkörpers (12) entlang eines Betätigungspfads zu bewegen und durch die Bewegung entlang des Betätigungspfads ein Fluidventil (112, 114) der Fluidaufbereitungsvorrichtung (100) zu betätigen;
wobei sich die mehreren Ventilbetätigungsflächen (28a, 28b) an mehreren an dem Kartuschenkörper (12) angeordneten Betätigungselementen (26a, 26b) der Ventilbetätigungseinrichtung (24) befinden;
wobei ein Betätigungselement (26a) eine Zugbetätigungskontur aufweist, welche mit einem Ventilkörper (126a) zur Zugbetätigung eines Fluidventils (112) der mehreren Fluidventile in Kontakt und/oder in Eingriff bringbar ist, und ein Betätigungselement (28b) eine Druckbetätigungskontur aufweist, welche mit einem Ventilkörper (126b) zur Druckbetätigung eines anderen Fluidventils (114) der mehreren Fluidventile in Kontakt und/oder in Eingriff bringbar ist;
wobei der Kartuschenkörper (12) eine stirnseitige Außenbewandung (32a, 32b) umfasst,
wobei sich das die Zugbetätigungskontur aufweisende Betätigungselement (26a) und das die Druckbetätigungskontur aufweisende Betätigungselement (26b) der Ventilbetätigungseinrichtung (24) von der stirnseitigen Außenbewandung (32a, 32b) in Axialrichtung nach außen erstrecken;
wobei die mehreren Betätigungselemente (26a, 26b) jeweils als Stege ausgebildet sind;
**dadurch gekennzeichnet, dass** sich das die Zugbetätigungskontur aufweisende Betätigungselement (26a) entlang eines ersten Kreisbahnteilabschnitts erstreckt und sich das die Druckbetätigungskontur aufweisende Betätigungselement (26b) entlang eines zweiten Kreisbahnteilabschnitts erstreckt, wobei der erste Kreisbahnteilabschnitt und der zweite Kreisbahnteilabschnitt unterschiedliche Kreisbahndurchmesser aufweisen.

2. Aufbereitungskartusche (10) nach Anspruch 1,
**dadurch gekennzeichnet, dass** der Kartuschenkörper (12) eine umlaufende Außenbewandung (30) umfasst, wobei
- eine oder mehrere Ventilbetätigungsflächen (28a) der Ventilbetätigungseinrichtung (24) an der umlaufenden Außenbewandung (30) des Kartuschenkörpers (12) angeordnet sind; oder
- sich ein oder mehrere Betätigungselemente (26a) der Ventilbetätigungseinrichtung (24) von der umlaufenden Außenbewandung (30) des Kartuschenkörpers (12), insbesondere in Radialrichtung, nach außen erstrecken.

3. Aufbereitungskartusche (10) nach einem der vorstehenden Ansprüche, **dadurch gekennzeichnet, dass** die Höhe der Stege zumindest innerhalb eines Bereichs des Kreisbahnteilabschnitts rampenartig zunimmt.

4. Aufbereitungskartusche (10) nach einem der vorstehenden Ansprüche, **dadurch gekennzeichnet, dass** ein oder mehrere Betätigungselemente (26) jeweils eine Wendel- oder Spiralform aufweisen.

5. Aufbereitungskartusche (10) nach einem der vorstehenden Ansprüche, **gekennzeichnet durch** eine Drehführung (34), über welche der Kartuschenkörper (12) oder ein Teil des Kartuschenkörpers (12) während der Drehbewegung geführt wird.

6. Aufbereitungskartusche (10) nach Anspruch 5,
**dadurch gekennzeichnet, dass** die Drehführung (34) dazu eingerichtet ist, während der Drehbewegung des Kartuschenkörpers (12) oder eines Teils des Kartuschenkörpers (12) eine Exzenterbewegung des Kartuschenkörpers (12) oder eines Teils des Kartuschenkörpers (12) zu verursachen.

7. Aufbereitungskartusche (10) nach einem der vorstehenden Ansprüche, **gekennzeichnet durch** eine eine Mitnahmekontur (18) aufweisende Drehbetätigungseinrichtung, über welche eine Drehbewegung auf den Kartuschenkörper (12) oder einen Teil des Kartuschenkörpers (12) übertragbar ist.

8. Fluidaufbereitungsvorrichtung (100) zum Aufbereiten eines Fluids, mit
- einer Kartuschenaufnahmestruktur (102);
- einer Aufbereitungskartusche (10), welche einen Kartuschenkörper (12) zur Aufnahme eines von dem aufzubereitenden Fluid durchströmbaren Aufbereitungsmaterials (44) aufweist;
- mehreren Fluidventilen (112, 114), welche an oder in der Kartuschenaufnahmestruktur (102) angeordnet und jeweils dazu eingerichtet sind, eine Strömung des Fluids in die Aufbereitungskartusche (10) hinein oder aus der Aufbereitungskartusche (10) heraus zu unterbrechen und freizugeben und hierzu in einen geschlossenen Zustand und einen geöffneten Zustand verbringbar sind; und
- einer Ventilbetätigungseinrichtung (24) mit mehreren Ventilbetätigungsflächen (28a, 28b) zur Kontaktbetätigung der mehreren Fluidventile (112, 114), wobei die mehreren Ventilbetätigungsflächen (28a, 28b) jeweils dazu eingerichtet sind, sich bei einer Drehbewegung des Kartuschenkörpers (12) oder eines Teils des Kartuschenkörpers (12) und/oder bei einer Drehbewegung eines Teils der Kartuschenaufnahmestruktur (102) entlang eines Betätigungspfads zu bewegen und durch die Bewegung entlang des Betätigungspfads die mehreren Fluidventile (112, 114) der Fluidaufbereitungsvorrichtung (100) zu betätigen;
wobei die Ventilbetätigungseinrichtung (24) an der Aufbereitungskartusche (10) ausgebildet und die Aufbereitungskartusche (10) nach einem der Ansprüche 1 bis 7 ausgebildet ist.

## Claims

1. Processing cartridge (10) for a fluid processing device (100), comprising
- a cartridge body (12) for accommodating processing material (44) through which the fluid to be processed can flow; and
- a valve actuator (24) having a plurality of valve actuation surfaces (28a, 28b) for contact-actuation of a plurality of fluid valves (112, 114) of the fluid processing device (100);
wherein the plurality of valve actuation surfaces (28a, 28b) are each configured to move along an actuation path upon rotational movement of the cartridge body (12) or a portion of the cartridge body (12) and to actuate a fluid valve (112, 114) of the fluid processing device (100) through movement along the actuation path;
wherein the plurality of valve actuation surfaces (28a, 28b) are located on a plurality of actuating elements (26a, 26b) of the valve actuator (24) arranged on the cartridge body (12);
wherein an actuating element (26a) has a pull-type actuation contour that can be brought into contact with and/or engaged by a valve body (126a) for pull-type actuation of a fluid valve (112) of the plurality of fluid valves, and an actuating element (28b) has a push-type actuation contour that can be brought into contact with and/or engaged by a valve body (126b) for push-type actuation of another fluid valve (114) of the plurality of fluid valves; wherein the cartridge body (12) comprises an end-face outer wall (32a, 32b),
wherein the actuating element (26a) having the pull-actuation contour and the actuating element (26b) having the push-actuation contour of the valve actuator (24) extend axially outward from the end-face outer wall (32a, 32b);
wherein the plurality of actuating elements (26a, 26b) are each formed as webs;
**characterized in that** the actuating element (26a) having the pull-actuation contour extends along a first circular path segment and the actuating element (26b) having the push-actuation contour extends along a second circular path segment, wherein the first circular path segment and the second circular path segment have different circular path diameters.

2. Processing cartridge (10) according to claim 1,
**characterized in that** the cartridge body (12) comprises a circumferential outer wall (30), wherein
- one or more valve actuation surfaces (28a) of the valve actuator (24) are arranged on the circumferential outer wall (30) of the cartridge body (12); or
- one or more actuating elements (26a) of the valve actuator (24) extend outward from the circumferential outer wall (30) of the cartridge body (12), in particular in the radial direction.

3. Processing cartridge (10) according to any one of the preceding claims, **characterized in that** the height of the webs increases ramp-like at least within a region of the circular path section.

4. Processing cartridge (10) according to any one of the preceding claims, **characterized in that** one or more actuating elements (26) each have a helical or spiral shape.

5. Processing cartridge (10) according to any one of the preceding claims, **characterized by** a rotational guide (34) over which the cartridge body (12) or a part of the cartridge body (12) is guided during the rotational movement.

6. Processing cartridge (10) according to claim 5,
**characterized in that** the rotational guide (34) is configured to cause an eccentric motion of the cartridge body (12) or a portion of the cartridge body (12) during the rotational movement of the cartridge body (12) or a portion of the cartridge body (12).

7. Processing cartridge (10) according to any one of the preceding claims, **characterized by** a rotary actuating device having a drive contour (18), via which a rotational movement can be transmitted to the cartridge body (12) or a part of the cartridge body (12).

8. Fluid processing device (100) for processing a fluid, comprising
- a cartridge receiving structure (102);
- a processing cartridge (10) comprising a cartridge body (12) for accommodating processing material (44) through which the fluid to be processed can flow;
- a plurality of fluid valves (112, 114), which are arranged on or within the cartridge receiving structure (102) and are each configured to interrupt and release a flow of the fluid into the processing cartridge (10) or out of the processing cartridge (10), and for this purpose can be brought into a closed state and into an open state; and
- a valve actuator (24) having a plurality of valve actuation surfaces (28a, 28b) for contact-actuation of the plurality of fluid valves (112, 114), wherein the plurality of valve actuation surfaces (28a, 28b) are each configured to move along an actuation path during a rotational movement of the cartridge body (12) or a part of the cartridge body (12) and/or during a rotational movement of a part of the cartridge receiving structure (102), and to actuate the plurality of fluid valves (112, 114) of the fluid processing device (100) by moving along the actuation path;
wherein the valve actuator (24) is formed on the processing cartridge (10), and the processing cartridge (10) is configured according to one of claims 1 to 7.

## Revendications

1. Cartouche de traitement (10) pour un dispositif de traitement de fluide (100),
comprenant
- un corps de cartouche (12) prévu pour recevoir une matière de traitement (44) pouvant être traversée par le fluide à traiter ;
et
- un actionneur de vanne (24) doté de plusieurs surfaces d'actionnement de vanne (28a, 28b) prévues pour actionner par contact plusieurs vannes à fluide (112, 114) du dispositif de traitement de fluide (100) ;
lesdites plusieurs surfaces d'actionnement de vanne (28a, 28b) étant chacune destinées à se déplacer, lors d'un mouvement de rotation du corps de cartouche (12) ou d'une partie du corps de cartouche (12), le long d'un chemin d'actionnement et, par ce mouvement le long du chemin d'actionnement, à actionner une vanne à fluide (112, 114) du dispositif de traitement de fluide (100) ;
lesdites plusieurs surfaces d'actionnement de vanne (28a, 28b) se trouvant sur plusieurs éléments actionneurs (26a, 26b) de l'actionneur de vanne (24) agencés sur le corps de cartouche (12) ; un élément actionneur (26a) présentant un contour d'actionnement par traction,
qui peut être mis en contact ou en prise avec un corps de vanne (126a) pour actionner par traction une vanne à fluide (112) desdites plusieurs vannes à fluide, et un élément actionneur (28b) présentant un contour d'actionnement par pression qui peut être mis en contact ou en prise avec un corps de vanne (126b) pour actionner par pression une autre vanne à fluide (114) desdites plusieurs vannes à fluide ;
ledit corps de cartouche (12) comprenant une paroi extérieure frontale (32a, 32b), l'élément actionneur présentant le contour d'actionnement par traction (26a) et l'élément actionneur présentant le contour d'actionnement par pression (26b) de l'actionneur de vanne (24) s'étendant, dans le sens axial, de la paroi extérieure frontale (32a, 32b) vers l'extérieur ; lesdits plusieurs éléments actionneurs (26a, 26b) étant chacun réalisés sous forme de barrette ; **caractérisée en ce que** l'élément actionneur présentant le contour d'actionnement par traction (26a) s'étend le long d'un premier tronçon de voie circulaire, et l'élément actionneur présentant le contour d'actionnement par pression (26b) s'étend le long d'un deuxième tronçon de voie circulaire, le premier tronçon de voie circulaire et le deuxième tronçon de voie circulaire présentant des diamètres de voie circulaire différents.

2. Cartouche de traitement (10) selon la revendication 1,
**caractérisée en ce que** le corps de cartouche (12) comprend une paroi extérieure périphérique (30),
- une ou plusieurs surfaces d'actionnement de vanne (28a) de l'actionneur de vanne (24) étant agencées sur la paroi extérieure périphérique (30) du corps de cartouche (12) ; ou
- un ou plusieurs éléments actionneurs (26a) de l'actionneur de vanne (24) s'étendant, notamment dans le sens radial, de la paroi extérieure périphérique (30) du corps de cartouche (12) vers l'extérieur.

3. Cartouche de traitement (10) selon l'une quelconque des revendications précédentes, **caractérisée en ce que** la hauteur des barrettes augmente à la manière d'une rampe, au moins sur une partie du tronçon de voie circulaire.

4. Cartouche de traitement (10) selon l'une quelconque des revendications précédentes, **caractérisée en ce qu'**un ou plusieurs éléments actionneurs (26) présentent chacun une forme en hélice ou en spirale.

5. Cartouche de traitement (10) selon l'une quelconque des revendications précédentes, **caractérisée par** un guide de rotation (34), par lequel le corps de cartouche (12) ou une partie du corps de cartouche (12) est guidé pendant le mouvement de rotation.

6. Cartouche de traitement (10) selon la revendication 5,
**caractérisée en ce que** le guide de rotation (34) est destiné à provoquer, lors du mouvement de rotation du corps de cartouche (12) ou d'une partie du corps de cartouche (12), un mouvement excentrique du corps de cartouche (12) ou d'une partie du corps de cartouche (12).

7. Cartouche de traitement (10) selon l'une quelconque des revendications précédentes, **caractérisée par** un actionneur de rotation présentant un contour d'entraînement (18) permettant de transmettre un mouvement de rotation au corps de cartouche (12) ou à une partie du corps de cartouche (12).

8. Dispositif de traitement de fluide (100) pour traiter un fluide, doté
- d'une structure pour recevoir la cartouche (102),
- d'une cartouche de traitement (10) présentant un corps de cartouche (12) destiné à recevoir une matière de traitement (44) pouvant être traversée par le fluide à traiter ;
- de plusieurs vannes à fluide (112, 114) qui sont agencées sur ou dans la structure destinée à recevoir la cartouche (102) et qui sont chacune destinées à interrompre un courant du fluide entrant dans la cartouche de traitement (10) ou sortant de la cartouche de traitement (10) et à le laisser circuler, et qui, à cet effet, peuvent être mises dans un état fermé ou dans un état ouvert ; et
- d'un actionneur de vanne (24) doté de plusieurs surfaces d'actionnement de vanne (28a, 28b) prévues pour actionner par contact lesdites plusieurs vannes à fluide (112, 114), lesdites plusieurs surfaces d'actionnement de vanne (28a, 28b) étant chacune destinées, lors d'un mouvement de rotation du corps de cartouche (12) ou d'une partie du corps de cartouche (12) et/ou lors d'un mouvement de rotation d'une partie de la structure destinée à recevoir la cartouche (102), à se déplacer le long d'un chemin d'actionnement et, par ce mouvement le long du chemin d'actionnement, à actionner lesdites plusieurs vannes à fluide (112, 114) du dispositif de traitement de fluide (100) ;
l'actionneur à vanne (24) étant conçu sur la cartouche de traitement (10), et la cartouche de traitement (10) étant conçue selon l'une quelconque des revendications 1 à 7.
